# EUROPEAN PATENT APPLICATION

(11) **EP 4 691 779 A1**
(43) Date of publication of application: **11.02.2026**
(21) Application number: 24778603.1
(22) Date of filing: 24.01.2024
(51) Int. Cl.: B41J 2/01

(54) **PRINTER, EJECTION FAILURE DETECTION METHOD, AND EJECTION FAILURE DETECTION PROGRAM**

(30) Priority: 25.03.2023 JP 2023049113
(71) Applicant: SCREEN Holdings Co., Ltd., Kyoto-shi, Kyoto 602-8585 (JP)
(72) Inventor: YOKOUCHI, Kenichi, Kyoto-shi, Kyoto 602-8585 (JP)
(74) Representative: Kilian Kilian & Partner mbB
(86) International application number: PCT/JP2024/001984
(87) International publication number: WO 2024/202457

(57) **Abstract**

Regarding an inkjet printing apparatus, it is possible to accurately detect an ejection failure of a nozzle without requiring much time and effort for generating and collecting learning data and setting a parameter. By performing unsupervised learning by an auto encoder using only images representing a favorable ejection state, a trained model for detecting an ejection failure of a nozzle is generated (S20). A plurality of partial images are cut out from a captured image of a print image of a test pattern (S50). The partial image is given as input data to the auto encoder constituting the trained model (S60), and a mean square error between the input data and output data is calculated (S70). Based on a result of comparing the mean square error with a threshold, it is determined whether or not an ejection failure nozzle is included in one or more nozzles corresponding to the input data (S80).

## Description

### TECHNICAL FIELD

The present invention relates to a printing apparatus having an ink ejection head (print head) in which a large number of nozzles for ejecting inks are provided, and more particularly to a technique for detecting a nozzle in an ejection failure state (hereinafter, referred to as an "ejection failure nozzle") in such a printing apparatus.

### BACKGROUND ART

An inkjet printing apparatus configured to perform printing by ejecting ink onto a printing medium such as printing paper has been widely known. In the inkjet printing apparatus, when an ejection interval becomes long, drying of the ink due to evaporation of a solvent near a nozzle, mixing of air bubbles into the nozzle, adhesion of dust to the nozzle, and the like may occur during a period in which printing is performed. That is, an ejection failure of a nozzle may occur. When the ejection failure occurs, missing of a dot corresponding to the ejection failure nozzle, that is, missing of the dot occurs in a print image. In this case, an operation (cleaning or flushing) for recovering a function of the ejection failure nozzle, and an alternative droplet in which another nozzle is caused to eject an ink droplet to be ejected by the ejection failure nozzle are performed.

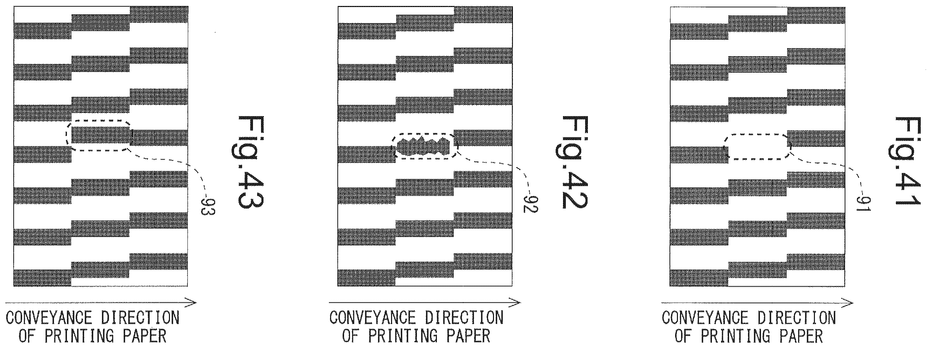

The ejection failure of the nozzle can be roughly classified into three types, and these three types will be described with reference to Figs. 41 to 43. Note that, Figs. 41 to 43 illustrate a part of a print image obtained by printing a stepwise regular pattern (test pattern), and a black shaded portion is a portion where ink is applied. In a dotted line portion denoted by reference character 91 in Fig. 41, the ink is not applied to a portion where the ink is to be applied. Hereinafter, such an ejection failure is referred to as "non-ejection". In a dotted line portion denoted by reference character 92 in Fig. 42, a shape of the portion where the ink is applied is different from an original shape. Hereinafter, such an ejection failure is referred to as a "shape failure". The shape failure also includes an ejection failure in a blurred state due to insufficient density and an ejection failure in a state where the portion where the ink is applied spreads in a main scanning direction (a direction orthogonal to a conveyance direction of printing paper). In a dotted line portion denoted by reference character 93 in Fig. 43, the ink is applied to a portion deviated in the main scanning direction from a portion where the ink is originally to be applied. Hereinafter, such an ejection failure is referred to as "side skipping".

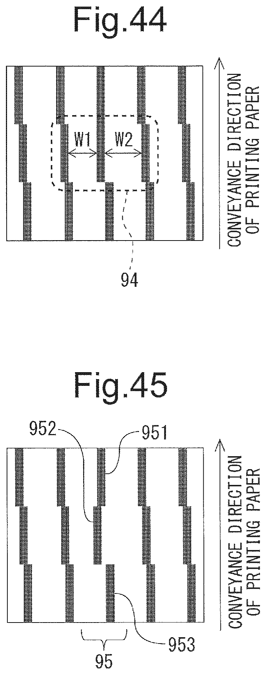

The side skipping will be further described. Focusing on a dotted line portion denoted by reference character 94 in Fig. 44, a length of W2 is longer than a length of W1. That is, an interval between ink ejection portions is not constant regarding the main scanning direction. Such side skipping is referred to as "dimensional side skipping". In addition, focusing on a portion denoted by reference character 95 in Fig. 45, a position of an ink ejection portion 952 is obviously abnormal in relation to positions of an ink ejection portion 951 and an ink ejection portion 953. Such side skipping is referred to as "side skipping that affects quality".

In the conventional inkjet printing apparatus, the ejection failure described above is detected by performing numerical analysis based on imaging data obtained by capturing an image on which a predetermined test pattern is printed with an imaging device. In this regard, for example, Japanese Laid-Open Patent Publication No. 2011-194734 describes that an actual landing position of the ink is obtained based on the imaging data and whether or not a nozzle to be determined is an ejection failure nozzle is determined in accordance with a distance from the landing position to a reference position.

In recent years, a technique using machine learning has also been proposed for the detection of the ejection failure of the nozzle. For example, Japanese Laid-Open Patent Publication No. 2019-137048 discloses a technique of classifying a favorable nozzle and an ejection failure nozzle by using a support vector machine on which supervised learning is performed based on information of a phase (deviation from a target position) and an amplitude (consistency of printing) obtained by evaluating imaging data of the image on which the test pattern is printed and a label indicating quality. In addition, Japanese Laid-Open Patent Publication No. 2021-094853 discloses a technique of classifying nozzles by a type of the ejection failure, by inputting imaging data of an image obtained by printing a test chart in a deep neural network (DNN) such as a convolutional neural network in which supervised learning is performed based on failure information.

### PRIOR ART DOCUMENTS

### PATENT DOCUMENTS

Patent Document 1: Japanese Laid-Open Patent Publication No. 2011-194734
Patent Document 2: Japanese Laid-Open Patent Publication No. 2019-137048
Patent Document 3: Japanese Laid-Open Patent Publication No. 2021-094853

### SUMMARY OF THE INVENTION

### PROBLEMS TO BE SOLVED BY THE INVENTION

However, according to the conventional method using numerical analysis, it is necessary to set various parameters. For example, it is necessary to set a threshold of a density used for detection of non-ejection or a shape failure, a threshold of a distance used for detection of the side skipping, and the like in consideration of printing conditions. Since a state of landing and permeation of the ink on the printing medium changes depending on the printing condition, it is difficult to appropriately set various parameters in consideration of the printing condition, and a lot of effort is required. In addition, according to the method using supervised learning, it is necessary to prepare a large number of pieces of imaging data of an image in a state where the ejection failure occurs (hereinafter, the imaging data is referred to as "failure data"), but since the ejection failure rarely occurs, it is extremely difficult to collect a sufficient number of pieces of failure data as learning data.

Therefore, an object of the present invention is to enable accurate detection of an ejection failure of a nozzle without requiring a large amount of time and effort for generating and collecting learning data and setting a parameter, regarding an inkjet printing apparatus.

### MEANS FOR SOLVING THE PROBLEMS

A first aspect of the present invention is directed to an ejection failure detection method for detecting an ejection failure of a nozzle in a printing apparatus including a head unit including a plurality of nozzles configured to eject ink onto a printing medium conveyed in a conveyance direction determined in advance, the method including:
a learning image preparation step of preparing a plurality of learning images each formed by ejecting ink from N nozzles, the N being an integer of 1 or more;
a model generation step of generating a trained model constituted by an auto encoder by performing unsupervised learning as machine learning by giving the plurality of learning images to the auto encoder and;
a test pattern printing step of causing the printing apparatus to print a test pattern to be formed by ejecting ink from the plurality of nozzles;
a capturing step of capturing a print image obtained in the test pattern printing step;
an image cutting step of cutting out, from a captured image obtained in the capturing step, a plurality of partial images each corresponding to N nozzles; and
an ejection failure determination step of determining whether or not a nozzle in an ejection failure state is included in N nozzles corresponding to input data based on a result of comparing a value obtained based on output data from the auto encoder and the input data with a threshold set as a parameter, by giving each of the plurality of partial images as the input data to the auto encoder constituting the trained model,
wherein the plurality of learning images do not include an image representing the ejection failure of the nozzle.

According to a second aspect of the present invention, in the first aspect of the present invention,
in the model generation step, the trained model is generated for each printing condition by performing unsupervised learning for each printing condition, and
in the ejection failure determination step, the trained model corresponding to a printing condition when the test pattern is printed in the test pattern printing step is used.

According to a third aspect of the present invention, in the first aspect of the present invention,
in the model generation step, the trained model is generated for each printing condition group by performing unsupervised learning for each printing condition group, the printing condition group being one or more printing conditions, and
in the ejection failure determination step, the trained model corresponding to a printing condition group including a printing condition when the test pattern is printed in the test pattern printing step is used.

According to a fourth aspect of the present invention, in the first aspect of the present invention,
in the model generation step, the trained model is generated for each type of ink by performing unsupervised learning for each type of ink, and
in the ejection failure determination step, the trained model corresponding to a type of ink used when the test pattern is printed in the test pattern printing step is used.

According to a fifth aspect of the present invention, in the first aspect of the present invention,
in the image cutting step, each of the plurality of partial images is cut out from the captured image using a provisional ejection position for predetermined one nozzle among corresponding N nozzles as a reference, the provisional ejection position being a position where ink is assumed to be ejected from each nozzle based on design information of the test pattern.

According to a sixth aspect of the present invention, in the fifth aspect of the present invention,
in the image cutting step,
a nozzle pitch, which is a distance between two adjacent nozzles in a direction orthogonal to the conveyance direction, is obtained based on positions of two position marks included in the captured image and a number of nozzles to eject ink to a region corresponding to a space between the two position marks, and
the provisional ejection position for each nozzle is obtained by using the nozzle pitch.

According to a seventh aspect of the present invention, in the first aspect of the present invention,
in the image cutting step,
an actual ejection position where ink is actually ejected from each nozzle is obtained based on the captured image, and
each of the plurality of partial images is cut out from the captured image using the actual ejection position for predetermined one nozzle among corresponding N nozzles as a reference.

According to an eighth aspect of the present invention, in the seventh aspect of the present invention,
the image cutting step includes:
a captured image division step of dividing the captured image into K divided images in the conveyance direction such that each of K divided images corresponds to one nozzle in the conveyance direction, the K being an integer of 2 or more,
an average value calculation step of calculating an average value of data of a plurality of pixels included for the conveyance direction for each of the K divided images obtained in the captured image division step, and
an actual ejection position specifying step of obtaining the actual ejection position for each nozzle based on the average value calculated in the average value calculation step.

According to a ninth aspect of the present invention, in the first aspect of the present invention,
in the image cutting step, each of the plurality of partial images is cut out from the captured image using an ideal ejection position for predetermined one nozzle among corresponding N nozzles as a reference, the ideal ejection position being an ideal position where ink is ejected from each nozzle.

According to a tenth aspect of the present invention, in the ninth aspect of the present invention,
the image cutting step includes:
a provisional ejection position calculation step of obtaining, as a provisional ejection position, each of positions where ink is assumed to be ejected from a focused nozzle and a predetermined number of nozzles near the focused nozzle based on design information of the test pattern, the focused nozzle being a nozzle for which the ideal ejection position is to be obtained among the plurality of nozzles,
an actual ejection position calculation step of obtaining an actual ejection position where ink is actually ejected from each of the predetermined number of nozzles near the focused nozzle based on the captured image,
a difference calculation step of calculating a difference between the provisional ejection position and the actual ejection position for each of the predetermined number of nozzles near the focused nozzle,
a difference average calculation step of calculating an average value of differences calculated in the difference calculation step, and
an ideal ejection position specifying step of obtaining the ideal ejection position for the focused nozzle by adding the average value calculated in the difference average calculation step to the provisional ejection position for the focused nozzle.

According to an eleventh aspect of the present invention, in the first aspect of the present invention,
the learning image preparation step includes:
a pre-learning printing step of causing the printing apparatus to print the test pattern and a tint pattern, which is to be formed by ejecting ink from the plurality of nozzles and has a constant density as a whole,
a pre-learning capturing step of capturing a print image obtained in the pre-learning printing step so as to obtain a first partially captured image that is a captured image corresponding to the tint pattern and a second partially captured image that is a captured image corresponding to the test pattern, and
a learning image extraction step of extracting the plurality of learning images from a portion corresponding to a tint normal portion in the second partially captured image, the tint normal portion being a portion excluding an abnormal portion in the first partially captured image obtained in the pre-learning capturing step.

According to a twelfth aspect of the present invention, in the first aspect of the present invention,
the input data and the output data are constituted by data of a plurality of pixels,
the ejection failure determination step includes:
   a self-encoding step of obtaining the output data by giving each of the plurality of partial images as the input data to the auto encoder constituting the trained model,
   an error calculation step of calculating a mean square error between the input data and the output data, and
   a comparison and determination step of determining whether or not the nozzle in the ejection failure state is included in the N nozzles corresponding to the input data based on a result of comparing the mean square error with the threshold, and
in the comparison and determination step, when the mean square error is larger than the threshold, it is determined that the nozzle in the ejection failure state is included in the N nozzles corresponding to the input data.

According to a thirteenth aspect of the present invention, in the first aspect of the present invention,
in the learning image preparation step, the plurality of learning images each formed by ejecting ink from one nozzle are prepared, and
in the image cutting step, the plurality of partial images each corresponding to one nozzle are cut out from the captured image.

According to a fourteenth aspect of the present invention, in any one of the first to thirteenth aspects of the present invention,
the ejection failure detection method further includes a print data correction step of correcting, based on a result obtained in the ejection failure determining step, print data for controlling the ejection of ink from the plurality of nozzles such that the ejection failure of the nozzle is compensated.

A fifteenth aspect of the present invention is directed to a printing apparatus including:
a head unit including a plurality of nozzles configured to eject ink onto a printing medium conveyed in a conveyance direction determined in advance;
an imaging device configured to capture a print image; and
a control unit configured to control ejection of ink from the plurality of nozzles and capturing of the print image by the imaging device,
wherein
the control unit includes:
   a model generation unit configured to generate a trained model constituted by an auto encoder by performing unsupervised learning as machine learning by giving a plurality of learning images each formed by ejecting ink from N nozzles to the auto encoder, the N being an integer of 1 or more,
   an image cutting unit configured to cut out, from a captured image obtained by the imaging device capturing a print image of a test pattern to be formed by ejecting ink from the plurality of nozzles, a plurality of partial images each corresponding to N nozzles, and
   an ejection failure determination unit configured to determine whether or not a nozzle in an ejection failure state is included in N nozzles corresponding to input data based on a result of comparing a value obtained based on output data from the auto encoder and the input data with a threshold set as a parameter, by giving each of the plurality of partial images as the input data to the auto encoder constituting the trained model, and
the plurality of learning images do not include an image representing an ejection failure of the nozzle.

According to a sixteenth aspect of the present invention, in the fifteenth aspect of the present invention,
the head unit includes an upstream ink ejection head disposed on an upstream side in the conveyance direction and a downstream ink ejection head disposed on a downstream side in the conveyance direction,
the model generation unit generates a trained model corresponding to the upstream ink ejection head and a trained model corresponding to the downstream ink ejection head by separately performing unsupervised learning on an image corresponding to a nozzle included in the upstream ink ejection head and an image corresponding to a nozzle included in the downstream ink ejection head,
each of the plurality of partial images cut out by the image cutting unit corresponds to one nozzle, and
the ejection failure determination unit
   gives the input data to the auto encoder constituting the trained model corresponding to the upstream ink ejection head when a nozzle corresponding to the input data is included in the upstream ink ejection head, and
   gives the input data to the auto encoder constituting the trained model corresponding to the downstream ink ejection head when the nozzle corresponding to the input data is included in the downstream ink ejection head.

According to a seventeenth aspect of the present invention, in the fifteenth aspect of the present invention,
the control unit further includes a learning image generation unit configured to generate the plurality of learning images,
a first partially captured image that is a captured image corresponding to a tint pattern, which is to be formed by ejecting ink from the plurality of nozzles and has a constant density as a whole, and a second partially captured image that is a captured image corresponding to a test pattern are obtained by the imaging device capturing a print image of the test pattern and a print image of the tint pattern, and
the learning image generation unit extracts the plurality of learning images from a portion corresponding to a tint normal portion in the second partially captured image, the tint normal portion being a portion excluding an abnormal portion in the first partially captured image.

According to an eighteenth aspect of the present invention, in the fifteenth aspect of the present invention,
the input data and the output data are constituted by data of a plurality of pixels,
the ejection failure determination unit includes:
   a self-encoding unit configured to receive each of the plurality of partial images as the input data and output the output data, the self-encoding unit including the auto encoder,
   an error calculation unit configured to calculate a mean square error between the input data and the output data, and
   a comparison and determination unit configured to determine whether or not the nozzle in the ejection failure state is included in the N nozzles corresponding to the input data based on a result of comparing the mean square error with the threshold, and
the comparison and determination unit determines that the nozzle in the ejection failure state is included in the N nozzles corresponding to the input data when the mean square error is larger than the threshold.

According to a nineteenth aspect of the present invention, in any one of the fifteenth to eighteenth aspects of the present invention,
the control unit further includes a print data correction unit configured to correct, based on a result of determination performed by the ejection failure determination unit, print data for controlling the ejection of ink from the plurality of nozzles such that the ejection failure of the nozzle is compensated.

A twentieth aspect of the present invention is directed to an ejection failure detection program for detecting an ejection failure of a nozzle in a printing apparatus including a head unit including a plurality of nozzles configured to eject ink onto a printing medium conveyed in a conveyance direction determined in advance and an imaging device configured to capture a print image,
the ejection failure detection program causing a computer included in the printing apparatus to execute:
   a model generation step of generating a trained model constituted by an auto encoder by performing unsupervised learning as machine learning by giving a plurality of learning images each formed by ejecting ink from N nozzles to the auto encoder, the N being an integer of 1 or more;
   a test pattern printing step of causing the printing apparatus to print a test pattern to be formed by ejecting ink from the plurality of nozzles;
   a capturing step of causing the imaging device to capture a print image obtained in the test pattern printing step;
   an image cutting step of cutting out, from a captured image obtained in the capturing step, a plurality of partial images each corresponding to N nozzles; and
   an ejection failure determination step of determining whether or not a nozzle in an ejection failure state is included in N nozzles corresponding to input data based on a result of comparing a value obtained based on output data from the auto encoder and the input data with a threshold set as a parameter, by giving each of the plurality of partial images as the input data to the auto encoder constituting the trained model,
wherein the plurality of learning images do not include an image representing the ejection failure of the nozzle.

### EFFECTS OF THE INVENTION

According to the first aspect of the present invention, the trained model for detecting the ejection failure of the nozzle is generated by performing the unsupervised learning by the auto encoder by using only the image representing the favorable ejection state. As a result, when the input data to be given to the auto encoder constituting the trained model is an image in which the ejection failure does not occur, the error between the input data and the output data (value obtained based on the input data and the output data) becomes small, and when the input data to be given to the auto encoder constituting the trained model is an image in which the ejection failure occurs, the error between the input data and the output data becomes large. Accordingly, as long as the threshold for comparison with the error is set as a parameter, it is possible to determine whether or not the nozzle in the ejection failure state is included in N nozzles (one or more nozzles) corresponding to each partial image given as the input data to the auto encoder without requiring setting of other parameters. In addition, although the ejection failure rarely occurs, since only the image representing the favorable ejection state is required as the learning data (learning image) (the plurality of learning images do not include the image representing the nozzle ejection failure), a sufficient number of learning data can be easily collected. From the above, regarding the printing apparatus including the head unit including the plurality of nozzles configured to eject the ink, it is possible to accurately detect the ejection failure of the nozzle without requiring a large amount of time and effort for generating and collecting learning data and setting the parameter. In addition, since the occurrence of the detection omission of the ejection failure due to the insufficient setting of the parameter is suppressed, the wasteful consumption of the printing medium and the ink due to reprinting is suppressed. Thus, it is possible to contribute to the achievement of sustainable development goal (SDG).

According to the second aspect of the present invention, since the printing condition is considered when determining whether or not there is the ejection failure of the nozzle, the ejection failure of the nozzle can be detected more accurately.

According to the third aspect of the present invention, the same effect as that of the second aspect of the present invention can be obtained.

According to the fourth aspect of the present invention, since the type of the ink is considered when determining whether or not there is the ejection failure of the nozzle, the ejection failure of the nozzle can be detected more accurately.

According to the fifth aspect of the present invention, it is possible to relatively easily set the position for reference when the partial image is cut out from the captured image.

According to the sixth aspect of the present invention, the same effect as that of the fifth aspect of the present invention can be obtained.

According to the seventh aspect of the present invention, it is possible to accurately detect the shape failure among the ejection failures with a relatively small number of learning data.

According to the eighth aspect of the present invention, the same effect as that of the seventh aspect of the present invention can be obtained.

According to the ninth aspect of the present invention, it is possible to detect the ejection failure, shape failure, and side skipping as the ejection failure regardless of the cutout range when the partial image is cut out from the captured image.

According to the tenth aspect of the present invention, the same effect as that of the ninth aspect of the present invention can be obtained.

According to the eleventh aspect of the present invention, it is possible to efficiently collect the learning data.

According to the twelfth aspect of the present invention, for example, as long as the threshold is set with reference to the data of the mean square error obtained in the past inspection or the like, the ejection failure of the nozzle is accurately detected.

According to the thirteenth aspect of the present invention, as compared with a case where the image corresponding to the plurality of nozzles is used as the learning image, since the size (image size) of the input and output data of the auto encoder is reduced, a processing load is reduced. In addition, even though the position for reference in cutting out the partial image from the captured image is not determined, it is possible to detect the ejection failure of the nozzle with relatively high accuracy.

According to the fourteenth aspect of the present invention, even though there is a nozzle in the ejection failure state, since the print data is corrected such that the ejection failure is compensated, a high-quality printed matter can be obtained.

According to the fifteenth aspect of the present invention, the same effect as that of the first aspect of the present invention can be obtained.

According to the sixteenth aspect of the present invention, in the printing apparatus including the head unit including the upstream ink ejection head and the downstream ink ejection head, since the difference in state between the upstream ink ejection head and the downstream ink ejection head is considered when determining whether or not there is the ejection failure of the nozzle, the ejection failure of the nozzle can be detected more accurately.

According to the seventeenth aspect of the present invention, it is possible to efficiently collect the learning data.

According to the eighteenth aspect of the present invention, for example, as long as the threshold is set with reference to the data of the mean square error obtained in the past inspection or the like, the ejection failure of the nozzle is accurately detected.

According to the nineteenth aspect of the present invention, even though there is a nozzle in the ejection failure state, since the print data is corrected such that the ejection failure is compensated, a high-quality printed matter can be obtained.

According to the twentieth aspect of the present invention, the same effect as that of the first aspect of the present invention can be obtained.

### BRIEF DESCRIPTION OF THE DRAWINGS

Fig. 1 is a diagram for explaining the concept of the present invention.
Fig. 2 is a diagram for explaining the concept of the present invention.
Fig. 3 is a diagram for explaining the concept of the present invention.
Fig. 4 is an overall configuration diagram of a printing system according to an embodiment of the present invention.
Fig. 5 is a schematic view illustrating a configuration example of an inkjet printing apparatus according to the embodiment.
Fig. 6 is a plan view illustrating a configuration example of a recording unit in the embodiment.
Fig. 7 is a diagram for explaining the disposition of nozzles in an ink ejection head in the embodiment.
Fig. 8 is a block diagram illustrating a hardware configuration of a print control device in the embodiment.
Fig. 9 is a block diagram illustrating a functional configuration of a control unit realized by executing a print control program in the print control device in the embodiment.
Fig. 10 is a diagram illustrating an example of an inspection chart printed during learning processing in the embodiment.
Fig. 11 is a diagram illustrating an example of an inspection chart printed during inference processing in the embodiment.
Fig. 12 is a block diagram illustrating a detailed configuration of an ejection failure detection unit in the embodiment (a case where each partial image corresponds to one nozzle).
Fig. 13 is a diagram illustrating an example of a print image of an inspection chart in a case where there is an ejection failure nozzle in the embodiment.
Fig. 14 is a block diagram illustrating a detailed configuration of the ejection failure detection unit in the embodiment (a case where each partial image corresponds to two or more nozzles).
Fig. 15 is a diagram illustrating an example of a structure of an auto encoder in the embodiment.
Fig. 16 is a flowchart illustrating a procedure of a series of processing of detecting an ejection failure nozzle in the embodiment.
Fig. 17 is a flowchart illustrating a detailed procedure for preparation of learning data (learning image) in the embodiment.
Fig. 18 is a diagram for explaining setting of a threshold as a parameter in the embodiment.
Fig. 19 is a diagram for explaining setting of a threshold as a parameter in the embodiment.
Fig. 20 is a diagram for explaining an example in which an image of a range corresponding to a plurality of nozzles continuous in a main scanning direction is cut out in the embodiment.
Fig. 21 is a diagram for explaining an example in which an image of a range corresponding to a plurality of nozzles continuous in a sub-scanning direction is cut out in the embodiment.
Fig. 22 is a diagram for explaining an example in which an image of a range corresponding to a plurality of nozzles continuous in both the main scanning direction and the sub-scanning direction is cut out in the embodiment.
Fig. 23 is a diagram for explaining a method for obtaining a provisional ejection position in the embodiment.
Fig. 24 is a flowchart illustrating a procedure for obtaining an actual ejection position in the embodiment.
Fig. 25 is a diagram for explaining division of a captured image in the embodiment.
Fig. 26 is a diagram for explaining trimming in dividing the captured image in the embodiment.
Fig. 27 is a diagram for explaining calculation of an average value of data of a plurality of pixels for each of divided images in the embodiment.
Fig. 28 is a diagram for explaining a method for obtaining an actual ejection position in a case where there is a non-ejection nozzle in the embodiment.
Fig. 29 is a diagram for explaining a method for obtaining an actual ejection position in a case where there is a non-ejection nozzle in the embodiment.
Fig. 30 is a flowchart illustrating a procedure for obtaining an ideal ejection position in the embodiment.
Fig. 31 is a diagram for explaining copying of uppermost and lowermost images in the captured image of a test chart in the embodiment.
Fig. 32 is a diagram for explaining a processing time priority cutting method in the embodiment.
Fig. 33 is a diagram for explaining division of a partial image into a plurality of nozzle unit images in the embodiment.
Fig. 34 is a diagram for explaining an accuracy priority cutting method in the embodiment.
Fig. 35 is a diagram for explaining specification of an ejection failure nozzle in a case where the accuracy priority cutting method is employed in the embodiment.
Fig. 36 is a diagram for explaining the specification of the ejection failure nozzle in a case where the accuracy priority cutting method is employed in the embodiment.
Fig. 37 is a diagram for explaining a relationship between a combination of a cutout range of an image and a cutout reference position and a type of a detectable ejection failure in the embodiment.
Fig. 38 is a plan view illustrating a configuration example of a recording unit in a third modification of the embodiment.
Fig. 39 is a diagram illustrating a detailed configuration of a head unit in the third modification.
Fig. 40 is a diagram for explaining execution of unsupervised learning in the third modification.
Fig. 41 is a diagram for explaining non-ejection.
Fig. 42 is a diagram for explaining a shape failure.
Fig. 43 is a diagram for explaining side skipping.
Fig. 44 is a diagram for explaining dimensional side skipping.
Fig. 45 is a diagram for explaining side skipping that affects quality.

### MODE FOR CARRYING OUT THE INVENTION

### <1. Concept of present invention>

Before describing an embodiment of the present invention, the concept of the present invention will be described. An auto encoder is known as one of neural networks used for machine learning. The learning using the auto encoder is performed such that output data is as close to input data as possible. Here, when the learning of the auto encoder is performed by using only a large number of normal data in a case where there are normal data and abnormal data, the output data is outputted from the trained auto encoder as follows. When the normal data is given, as the input data, to the auto encoder, the normal data is outputted, as the output data, from the auto encoder. In this case, an error between the input data and the output data is extremely small. In contrast, when the abnormal data is given, as the input data, to the auto encoder, data obtained by bringing the abnormal data close to the normal data is outputted, as the output data, from the auto encoder. In this case, the error between the input data and the output data is large. Considering such a difference in error, the auto encoder can be used to detect the abnormal data.

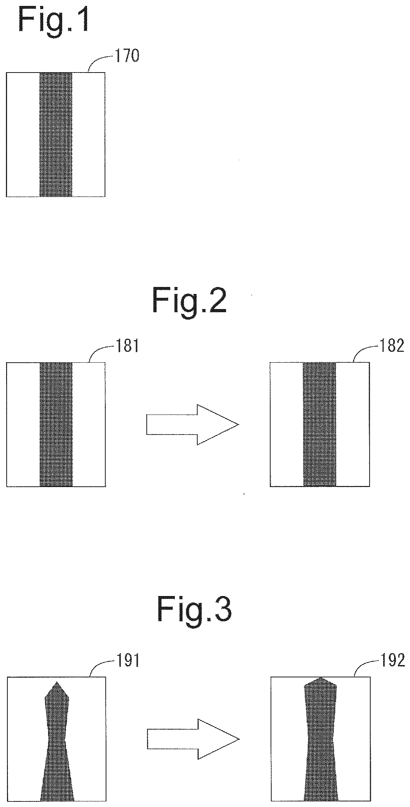

Here, for example, it is assumed that a normal print image of a test pattern corresponding to one nozzle is an image illustrated in a rectangular portion denoted by reference character 170 in Fig. 1. Note that, in Fig. 1, the black shaded portion is a portion painted with ink. When an image illustrated in a rectangular portion denoted by reference character 181 in Fig. 2 (image in which an ejection failure does not occur) is given as the input data to the trained auto encoder, output data corresponding to an image illustrated in a rectangular portion denoted by reference character 182 in Fig. 2 is outputted from the trained auto encoder. In this case, an error between the input data and the output data is extremely small. In contrast, when an image illustrated in a rectangular portion denoted by reference character 191 in Fig. 3 (image in which an ejection failure occurs) is given as the input data to the trained auto encoder, output data corresponding to an image illustrated in a rectangular portion denoted by reference character 192 in Fig. 3 is outputted from the trained auto encoder, for example. In this case, the error between the input data and the output data is large. In this manner, when the ejection failure occurs, the error between the input data and the output data is large. An ejection failure nozzle can be detected by using this.

Thus, in the following embodiment, the learning of the auto encoder is performed by using only normal images (images in which the ejection failure does not occur) in a captured image obtained by capturing the print image of the test pattern for inspecting an ejection state of the ink from each nozzle with an imaging device, and then the image to be inspected is given, as the input data, to the trained auto encoder. Then, it is determined whether or not the ejection failure nozzle is included in one or more nozzles corresponding to the image to be inspected, based on the error between the input data to the trained auto encoder and the output data from the trained auto encoder.

In consideration of the above circumference, an embodiment of the present invention will be described below with reference to the accompanying drawings.

### <2. Overall configuration of printing system>

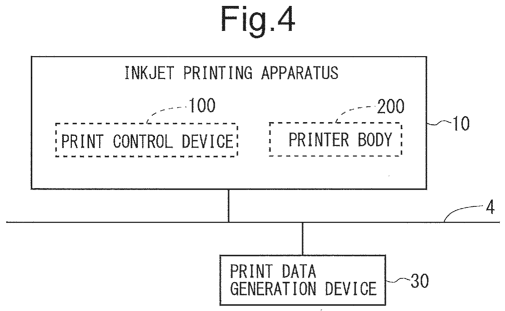

Fig. 4 is an overall configuration diagram of a printing system according to an embodiment of the present invention. The printing system includes an inkjet printing apparatus 10 and a print data generation apparatus 30. The inkjet printing apparatus 10 and the print data generation apparatus 30 are connected to each other by a LAN 4. The print data generation apparatus 30 performs RIP (Raster Image Processor) processing or the like on submitted data such as a PDF file to generate print data. The print data generated by the print data generation apparatus 30 is transmitted to the inkjet printing apparatus 10 via the LAN 4. The inkjet printing apparatus 10 includes a printer body 200 and a print control device 100 that controls an operation of the printer body 200. The inkjet printing apparatus 10 outputs a print image on printing paper as a printing medium based on the print data transmitted from the print data generation apparatus 30, without using a printing plate. Note that, the present invention can also be applied to a case where a printing medium (for example, a film) other than the printing paper is used.

### <3. Configuration of printer body of inkjet printing apparatus>

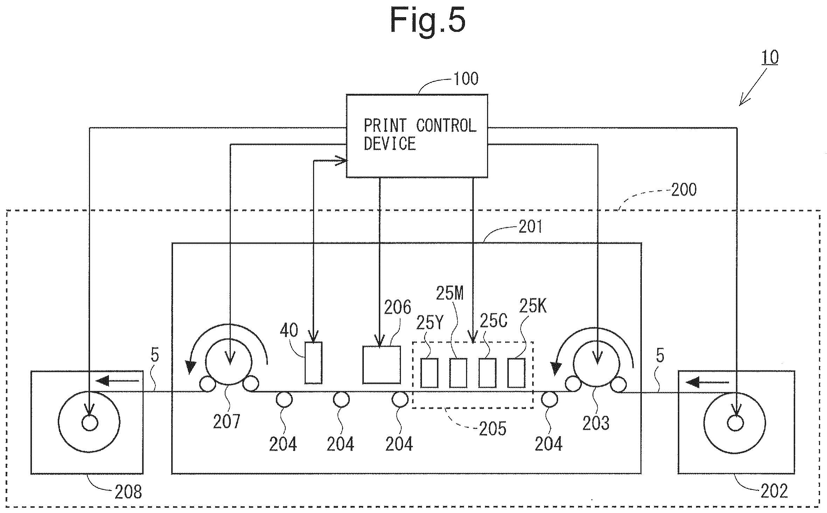

Fig. 5 is a schematic diagram illustrating a configuration example of the inkjet printing apparatus 10. As described above, the inkjet printing apparatus 10 includes the print control device 100 and the printer body 200.

The printer body 200 includes a paper feeding unit 202 that supplies printing paper (in this example, rolled printing paper) 5 to a printing mechanism 201, the printing mechanism 201 that performs printing on the printing paper 5, and a paper winding unit 208 that winds the printing paper 5 after printing in a roll shape.

The printing mechanism 201 includes a first driving roller 203 for conveying the printing paper 5 to the inside, a plurality of support rollers 204 for conveying the printing paper 5 inside the printing mechanism 201, a recording unit 205 for recording the print image on the printing paper 5, a drying mechanism 206 for drying the printing paper 5 on which the print image is recorded, and a second driving roller 207 for outputting the printing paper 5 from the inside of the printing mechanism 201. The recording unit 205 includes a K color head unit 25K configured to eject an ink of K color (black), a C color head unit 25C configured to eject an ink of C color (cyan), an M color head unit 25M configured to eject an ink of M color (magenta), and a Y color head unit 25Y configured to eject an ink of Y color (yellow). In addition, the printing mechanism 201 includes an in-line scanner 40 as an imaging device that captures the print image recorded on the printing paper 5 by the recording unit 205. Imaging data obtained by the in-line scanner 40 is sent to the print control device 100. Note that, in the following description, in a case where the colors of the ink ejected from the head units are not distinguished, the head unit is denoted by reference character 25.

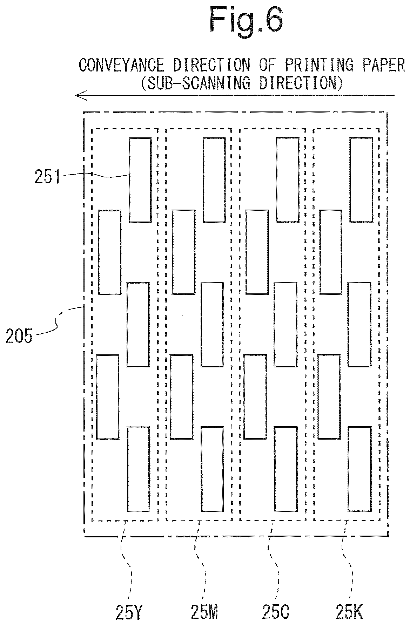

Fig. 6 is a plan view illustrating a configuration example of the recording unit 205. As illustrated in Fig. 6, the recording unit 205 includes the K color head unit 25K, the C color head unit 25C, the M color head unit 25M, and the Y color head unit 25Y arrayed in a row in a conveyance direction (sub-scanning direction) of the printing paper 5. Each head unit 25 includes a plurality of ink ejection heads (print heads) 251 disposed in a staggered manner. Each ink ejection head 251 includes a large number of nozzles (not illustrated in Fig. 6) for ejecting the ink. Each nozzle of the ink ejection head 251 included in the K color head unit 25K ejects the ink of K color, each nozzle of the ink ejection head 251 included in the C color head unit 25C ejects the ink of C color, each nozzle of the ink ejection head 251 included in the M color head unit 25M ejects the ink of M color, and each nozzle of the ink ejection head 251 included in the Y color head unit 25Y ejects the ink of Y color.

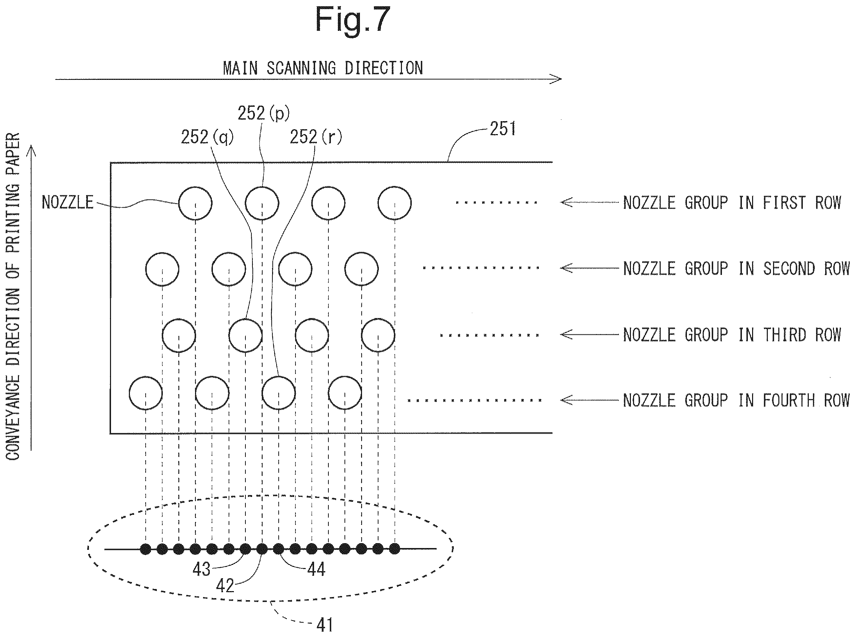

Fig. 7 is a diagram for explaining the disposition of the nozzles in the ink ejection head 251. Typically, the ink ejection head 251 includes a plurality of rows of nozzle groups each including a plurality of nozzles disposed side by side in the main scanning direction (direction orthogonal to the conveyance direction of the printing paper 5). In the example illustrated in Fig. 7, four rows of nozzle groups are included in the ink ejection head 251. A portion denoted by reference character 41 in Fig. 7 schematically illustrates landing positions, on the printing paper 5, of the ink ejected from respective nozzles. The plurality of nozzles in the ink ejection head 251 are disposed such that the landing positions of the ink ejected from the nozzles included in the nozzle group in a first row, the landing positions of the ink ejected from the nozzles included in the nozzle group in a second row, the landing positions of the ink ejected from the nozzles included in the nozzle group in a third row, and the landing positions of the ink ejected from the nozzles included in the nozzle group in a fourth row are different positions. For example, the landing position of the ink ejected from each nozzle included in the nozzle group in the first row is a position between the landing position of the ink ejected from the nozzle included in the nozzle group in the third row and the landing position of the ink ejected from the nozzle included in the nozzle group in the fourth row. In the example illustrated in Fig. 7, a landing position 42 of the ink ejected from the nozzle denoted by reference character 252(p) is a position between a landing position 43 of the ink ejected from the nozzle denoted by reference character 252(q) and a landing position 44 of the ink ejected from the nozzle denoted by reference character 252(r).

### <4. Configuration of print control device>

### <4.1 Hardware configuration>

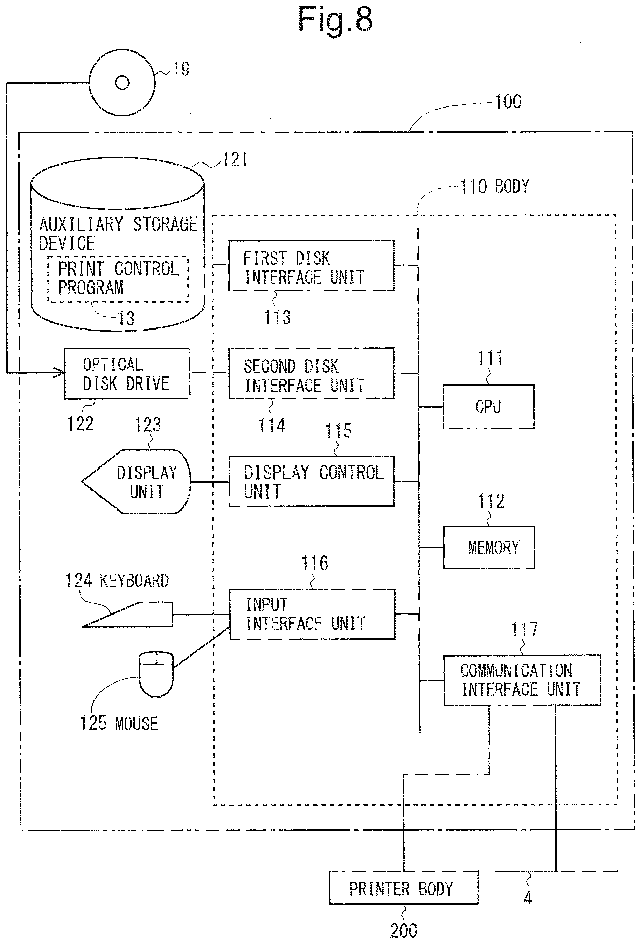

Fig. 8 is a block diagram illustrating a hardware configuration of the print control device 100. As illustrated in Fig. 8, the print control device 100 includes a body 110, an auxiliary storage device 121, an optical disk drive 122, a display unit 123, a keyboard 124, a mouse 125, and the like. The body 110 includes a CPU 111, a memory 112, a first disk interface unit 113, a second disk interface unit 114, a display control unit 115, an input interface unit 116, and a communication interface unit 117. The CPU 111, the memory 112, the first disk interface unit 113, the second disk interface unit 114, the display control unit 115, the input interface unit 116, and the communication interface unit 117 are connected to each other via a system bus. The auxiliary storage device 121 is connected to the first disk interface unit 113. The optical disk drive 122 is connected to the second disk interface unit 114. The display unit (display device) 123 is connected to the display control unit 115. The keyboard 124 and the mouse 125 are connected to the input interface unit 116. The printer body 200 is connected to the communication interface unit 117 via a communication cable. In addition, the communication interface unit 117 is connected to the LAN 4. The auxiliary storage device 121 is a magnetic disk device or the like. An optical disc 19 as a computer-readable recording medium such as a CD-ROM or a DVD-ROM is inserted into the optical disc drive 122. The display unit 123 is a liquid crystal display or the like. The display unit 123 is used to display information desired by an operator. The keyboard 124 and the mouse 125 are used by an operator to input instructions to the print control device 100.

The auxiliary storage device 121 stores a print control program (program for controlling execution of print processing by the printer body 200) 13. The print control program 13 according to the present embodiment includes, as a subprogram, an ejection failure detection program for detecting the ejection failure of the nozzle. The CPU 111 realizes various functions of the print control device 100 by reading the print control program 13 stored in the auxiliary storage device 121 into the memory 112 and executing the program. The memory 112 includes a random access memory (RAM) and a read only memory (ROM). The memory 112 functions as a work area for the CPU 111 to execute the print control program 13 stored in the auxiliary storage device 121. Note that, the print control program 13 is provided by being stored in the computer-readable recording medium (non-transitory recording medium). That is, for example, a user purchases the optical disk 19 as a recording medium of the print control program 13, inserts the optical disk into the optical disk drive 122, reads the print control program 13 from the optical disk 19, and installs the print control program in the auxiliary storage device 121.

### <4.2 Functional configuration>

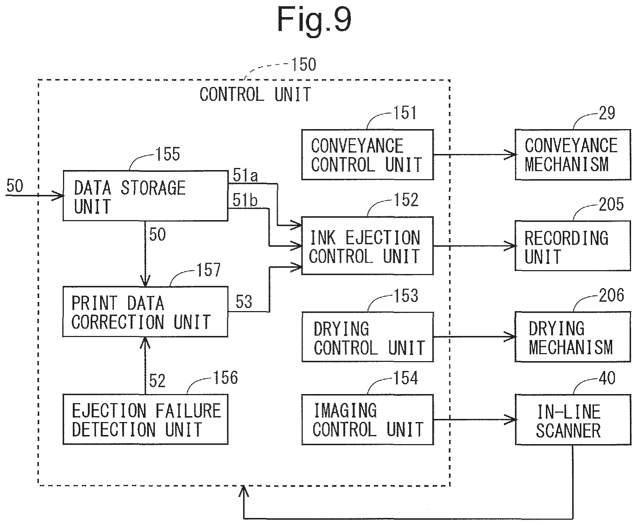

Fig. 9 is a block diagram illustrating a functional configuration of a control unit 150 realized by the print control device 100 executing the print control program 13. The control unit 150 includes a conveyance control unit 151, an ink ejection control unit 152, a drying control unit 153, an imaging control unit 154, a data storage unit 155, an ejection failure detection unit 156, and a print data correction unit 157.

The conveyance control unit 151 controls a speed (conveyance speed) at which a conveyance mechanism 29 conveys the printing paper 5. Note that, the conveyance mechanism 29 is realized by the paper feeding unit 202, the first driving roller 203, the plurality of support rollers 204, the second driving roller 207, and the paper winding unit 208 (see Fig. 5). The drying control unit 153 controls a temperature (drying temperature) at which the drying mechanism 206 dries the printing paper 5 after printing. The imaging control unit 154 controls an imaging timing for the print image by the in-line scanner 40.

The data storage unit 155 temporarily stores print data (print data based on a print job) 50 after RIP processing transmitted from the print data generation apparatus 30. Note that, the print data 50 is data for controlling the ejection of the ink from the plurality of nozzles included in each head unit 25. In addition, the data storage unit 155 also stores inspection chart data representing an inspection chart for detecting the ejection failure nozzle. In the present embodiment, as the inspection chart data, test pattern data 51a representing a test pattern which is a stepwise pattern to be formed by ejecting the ink from all the nozzles in one head unit 25 and tint pattern data 51b representing a tint pattern, which is to be formed by ejecting the ink from all the nozzles in one head unit 25 and has a constant density as a whole, are stored in the data storage unit 155.

The ejection failure detection unit 156 detects the ejection failure nozzle based on imaging data (captured image) obtained by capturing a print image of the inspection chart with the in-line scanner 40. Ejection failure information 52 for specifying the ejection failure nozzle is outputted from the ejection failure detection unit 156. The auto encoder is used for the detection of the ejection failure nozzle by the ejection failure detection unit 156. The processing by the ejection failure detection unit 156 is roughly divided into processing of preparing learning data and performing learning of the auto encoder by using the learning data (hereinafter, the processing is simply referred to as "learning processing") and processing of inferring presence or absence of the ejection failure nozzle and a position of the ejection failure nozzle by using the trained auto encoder (hereinafter, the processing is simply referred to as "inference processing"). Note that, the ejection failure detection unit 156 will be described later in detail.

The print data correction unit 157 corrects, based on the ejection failure information 52, the print data 50 after the RIP processing stored in the data storage unit 155 such that the ejection failure of the nozzle is compensated. Specifically, based on the ejection failure information 52, the print data correction unit 157 corrects the print data 50 for controlling the ejection of the ink from the plurality of nozzles included in each head unit 25, such that the ejection failure of the nozzle determined to be in an ejection failure state by the ejection failure detection unit 156 is compensated. More specifically, for example, the print data 50 is corrected such that an ejection amount of ink from nozzles around the nozzle determined to be in the ejection failure state increases. Corrected print data 53 is outputted from the print data correction unit 157.

The ink ejection control unit 152 controls the ejection of the ink from each nozzle included in the four head units 25K, 25C, 25M, and 25Y constituting the recording unit 205 based on the inspection chart data (the test pattern data 51a and the tint pattern data 51b) stored in the data storage unit 155 or the print data 53 after being corrected by the print data correction unit 157. For example, an ejection timing of the ink and the ejection amount of the ink are controlled. The inspection chart is printed on the printing paper 5 by controlling the ejection of the ink from each nozzle based on the inspection chart data, and an image based on the print job is printed on the printing paper 5 by controlling the ejection of the ink from each nozzle based on the print data 53.

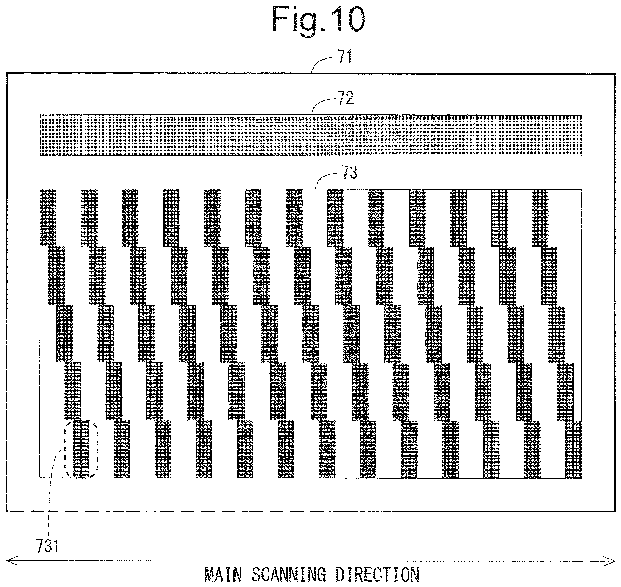

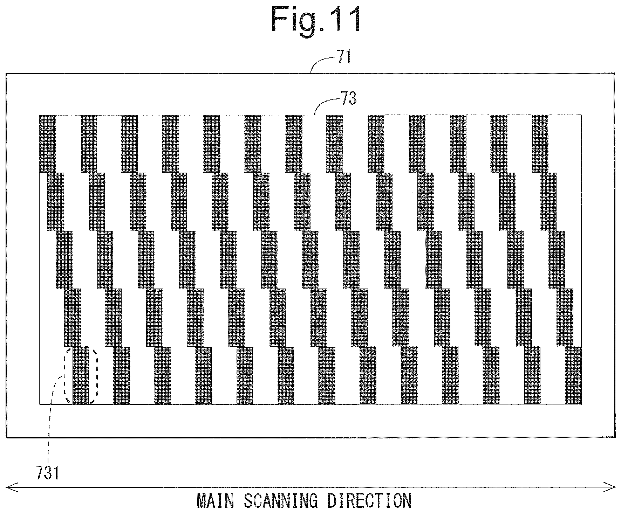

In the present embodiment, while the inspection chart is printed during the learning processing and during the inference processing, different inspection charts are printed during the learning processing and during the inference processing. Specifically, an inspection chart 71 schematically illustrated in Fig. 10 including a tint pattern 72 and a test pattern (stepwise pattern) 73 is printed during the learning processing, whereas an inspection chart 71 schematically illustrated in Fig. 11 including only the test pattern (stepwise pattern) 73 is printed during the inference processing. That is, the ink ejection control unit 152 controls the ejection of the ink from each nozzle based on the tint pattern data 51b and the test pattern data 51a during the learning processing, and the ink ejection control unit 152 controls the ejection of the ink from each nozzle based on the test pattern data 51a during the inference processing. Note that, a pattern other than the stepwise pattern can be adopted as the test pattern as long as the pattern has regularity.

Regarding the inspection chart 71, the tint pattern 72 is a pattern having a constant density as a whole as described above, and the test pattern 73 is constituted by a plurality of linear patterns 731. Each linear pattern 731 is a pattern formed by ejecting the ink from one corresponding nozzle. Note that, in practice, the test pattern 73 includes more linear patterns 731 than the patterns illustrated in Figs. 10 and 11. For example, in a case where one head unit 25 includes 24,000 nozzles, the test pattern 73 for one color is formed by 24,000 linear patterns 731.

Regarding the test pattern 73, hereinafter, a group of linear patterns 731 arranged in a line in the main scanning direction is referred to as a "stage". In the example illustrated in Fig. 10, the test pattern 73 includes five stages.

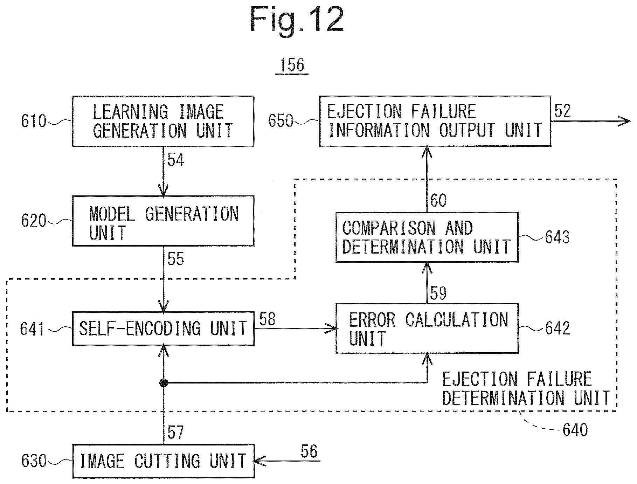

Fig. 12 is a block diagram illustrating a detailed configuration of the ejection failure detection unit 156. The ejection failure detection unit 156 includes a learning image generation unit 610, a model generation unit 620, an image cutting unit 630, an ejection failure determination unit 640, and an ejection failure information output unit 650. The ejection failure determination unit 640 includes a self-encoding unit 641, an error calculation unit 642, and a comparison and determination unit 643.

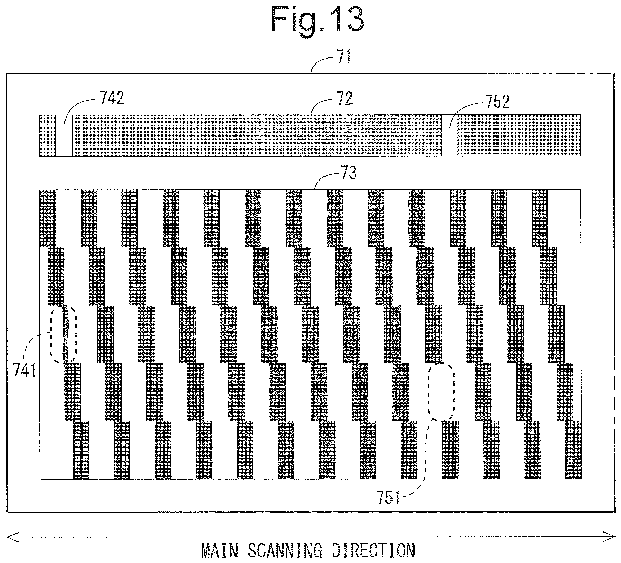

The learning image generation unit 610 generates a plurality of learning images 54 as learning data used for learning of the auto encoder. Incidentally, when there is no ejection failure nozzle, the print image of the inspection chart 71 is as illustrated in Fig. 10. In contrast, when there is the ejection failure nozzle, the print image of the inspection chart 71 is as illustrated in Fig. 13, for example. In the example illustrated in Fig. 13, the linear pattern is not normally printed in a portion denoted by reference character 741 and a portion denoted by reference character 751. In addition, the tint pattern 72 is not normally printed in a portion denoted by reference character 742 corresponding to the ejection failure in the portion denoted by reference character 741, and the tint pattern 72 is not normally printed in a portion denoted by reference character 752 corresponding to the ejection failure in the portion denoted by reference character 751. As above, in a case where there is the ejection failure nozzle, the tint pattern 72 is not normally printed in the portion corresponding to the ejection failure nozzle. Thus, with a portion excluding an abnormal portion (a portion where the ejection failure occurs) in a captured image obtained by capturing the print image of the tint pattern 72 by the in-line scanner 40 regarded as a tint normal portion, the learning image generation unit 610 according to the present embodiment cuts out and extracts a plurality of images as learning images from a portion corresponding to the tint normal portion in a captured image obtained by capturing the print image of the test pattern 73 by the in-line scanner 40. As a result, the plurality of learning images 54 as the learning data used for learning of the auto encoder are generated. The learning image 54 may be an image formed by ejecting the ink from one nozzle or an image formed by ejecting the ink from two or more nozzles. Hereinafter, it is assumed that the plurality of learning images 54 each formed by ejecting the ink from N nozzles are generated by the learning image generation unit 610, where N is an integer of 1 or more. Note that, a captured image obtained by capturing the print image of the tint pattern 72 by the in-line scanner 40 corresponds to a first partially captured image, and a captured image obtained by capturing the print image of the test pattern 73 by the in-line scanner 40 corresponds to a second partially captured image.

The model generation unit 620 generates the trained model 55 constituted by the auto encoder by performing unsupervised learning as machine learning by giving, as the input data, the plurality of learning images 54 generated by the learning image generation unit 610 to the auto encoder. The trained model 55 is used as the self-encoding unit 641 included in the ejection failure determination unit 640.

During the inference processing, the image cutting unit 630 cuts out a plurality of partial images 57 corresponding to the N nozzles (one or more nozzles) from a captured image 56 obtained by capturing the print image of the test pattern 73 by the in-line scanner 40.

The ejection failure determination unit 640 gives, as the input data, each of the plurality of partial images 57 cut out by the image cutting unit 630 to the auto encoder constituting the trained model 55 generated by the model generation unit 620, and determines whether or not the ejection failure nozzle is included in the N nozzles corresponding to the input data (partial images 57) based on a result of comparing a value obtained based on the output data from the auto encoder and the input data with a threshold set as a parameter. Then, a determination result 60 is outputted from the ejection failure determination unit 640.

The self-encoding unit 641 is the trained model 55 generated by the model generation unit 620, and receives, as the input data, each of the plurality of partial images 57 cut out by the image cutting unit 630, and outputs output data 58 obtained by forward propagation processing in the auto encoder. The error calculation unit 642 calculates a mean square error 59 between the input data (the partial image 57 cut out by the image cutting unit 630) to the self-encoding unit 641 and the output data 58 from the self-encoding unit 641. The comparison and determination unit 643 determines whether or not the ejection failure nozzle is included in the N nozzles corresponding to the input data to the self-encoding unit 641 based on a result of comparing the mean square error 59 with the threshold described above. In this regard, when the mean square error 59 is larger than the threshold, the comparison and determination unit 643 determines that the ejection failure nozzle is included in the N nozzles corresponding to the input data. Note that, in the present embodiment, a self-encoding step is realized by the processing of the self-encoding unit 641, an error calculation step is realized by the processing of the error calculation unit 642, and a comparison and determination step is realized by the processing of the comparison and determination unit 643.

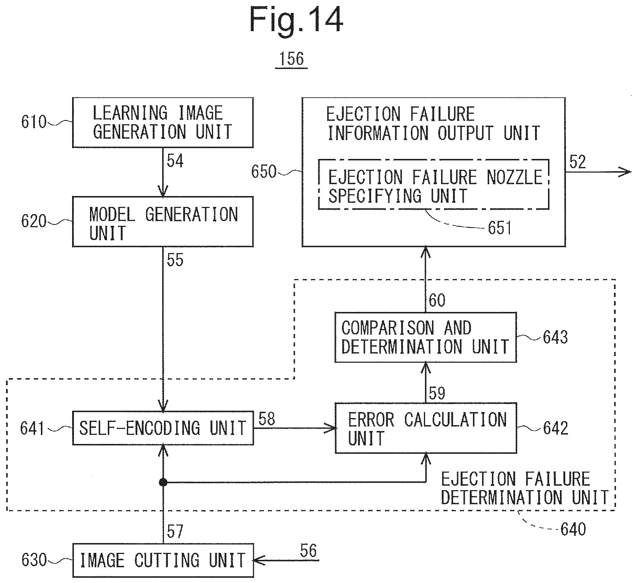

The ejection failure information output unit 650 outputs the ejection failure information 52 for specifying the ejection failure nozzle based on the determination result 60 outputted from the ejection failure determination unit 640. In a case where each partial image 57 corresponds to one nozzle, the determination result 60 outputted from the ejection failure determination unit 640 eventually indicates whether or not the nozzle corresponding to each partial image 57 is in the ejection failure state. Accordingly, the ejection failure nozzle is specified based on the determination result 60 outputted from the ejection failure determination unit 640. However, in a case where each partial image 57 corresponds to two or more nozzles, the determination result 60 corresponding to each partial image 57 merely indicates whether or not the ejection failure nozzle is included in the corresponding two or more nozzles. Therefore, in a case where each partial image 57 corresponds to two or more nozzles, as illustrated in Fig. 14, an ejection failure nozzle specifying unit 651 configured to specify the ejection failure nozzle in consideration of the determination result 60 (the determination result 60 outputted from the ejection failure determination unit 640) for each of the plurality of partial images 57 is provided in the ejection failure information output unit 650. Note that, a method for specifying, by the ejection failure nozzle specifying unit 651, the ejection failure nozzle will be described later.

### <4.3 Auto encoder>

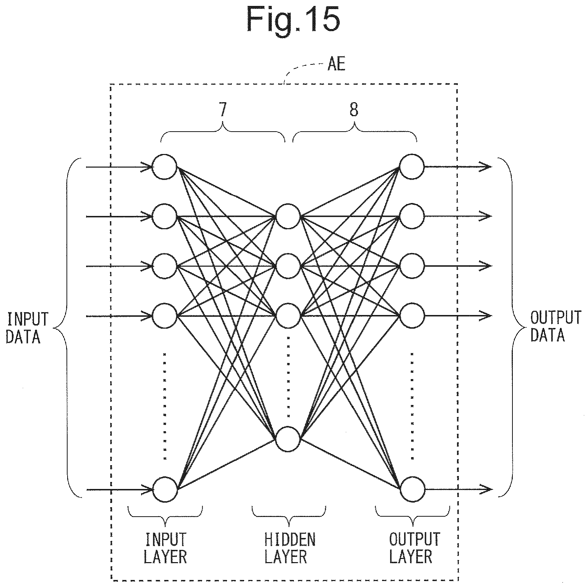

Fig. 15 is a diagram illustrating an example of a structure of an auto encoder AE used in the present embodiment. The auto encoder AE includes an input layer, a hidden layer (intermediate layer), and an output layer. The input layer includes units (neurons) equal in number to the number of pixels constituting an image to be inspected as the input data. The hidden layer is constituted by a smaller number of units than the number of units constituting the input layer. The output layer includes units equal in number to the number of units constituting the input layer. Coupling between the input layer and the hidden layer and coupling between the hidden layer and the output layer are full coupling. For example, a sigmoid function is adopted as an activation function of the hidden layer and the output layer. With the above structure, a portion denoted by reference character 7 in Fig. 15 (a portion including the input layer and the hidden layer) functions as an encoder, and a portion denoted by reference character 8 in Fig. 15 (a portion including the hidden layer and the output layer) functions as a decoder. In addition, since the input layer and the output layer are constituted by units in number equal to the number of pixels constituting the image to be inspected, it can be grasped that the input data to the auto encoder AE and the output data from the auto encoder AE are constituted by data of a plurality of pixels.

The learning using the auto encoder AE is performed as follows, for example. When the input data is given to the auto encoder AE, the forward propagation processing is performed in the auto encoder AE. Thereafter, a sum of square errors of the input data and the output data outputted from the auto encoder AE is obtained. Parameters (weighting factor or bias) of the auto encoder AE are updated by using a gradient descent method based on a result obtained by back propagation processing of the error. The above parameters are optimized by repeating the learning in this manner. From the above, the learning using the auto encoder AE is performed such that the output data approaches the input data as much as possible. That is, the learning is performed such that the error between the input data and the output data is minimized.

Meanwhile, as described above, the input data to the auto encoder AE is compared with the output data outputted from the auto encoder AE during the learning processing. That is, teaching data is not used. Thus, in the present embodiment, the unsupervised learning as the machine learning is performed by using the auto encoder AE.

### <5. Processing procedure of ejection failure nozzle detection (ejection failure detection method)>

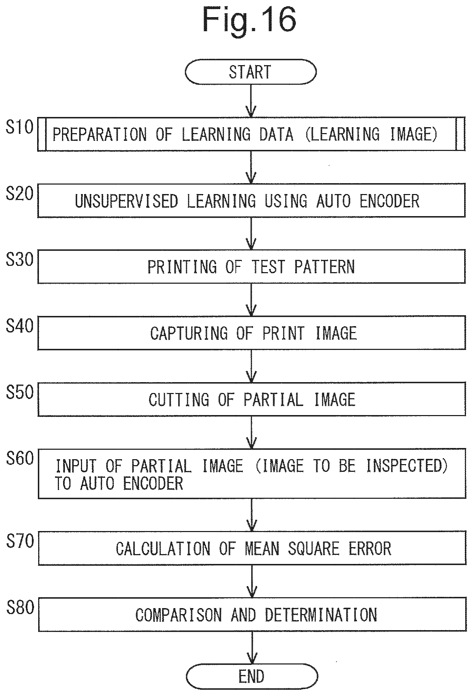

A procedure of a series of processing of detecting the ejection failure nozzle will be described with reference to a flowchart illustrated in Fig. 16. First, learning data to be used for learning using the auto encoder AE described above is prepared (step S10). In step S10, the plurality of learning images 54 each formed by ejecting the ink from the N nozzles are prepared as the learning data.

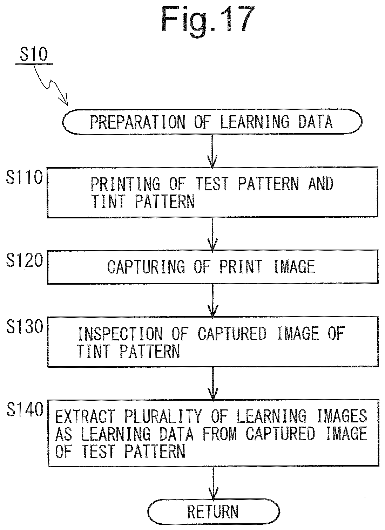

Here, a detailed procedure for preparing the learning data will be described with reference to a flowchart illustrated in Fig. 17. First, the inspection chart 71 is printed (step S110). Specifically, the ink ejection control unit 152 controls the ejection of the ink from each nozzle based on the inspection chart data (the test pattern data 51a and the tint pattern data 51b) stored in the data storage unit 155, and thus, the inspection chart 71 schematically illustrated in Fig. 10 including the tint pattern 72 and the test pattern (stepwise pattern) 73 is printed. After printing the inspection chart 71, the in-line scanner 40 captures the print image (the print image obtained in step S110) of the inspection chart 71 under the control by the imaging control unit 154 (step S120). Subsequently, the captured image for the tint pattern 72 in the captured image obtained in step S120 is inspected (step S130). Based on the result of the inspection in step S130, the plurality of learning images 54 serving as the learning data are extracted from the captured image for the test pattern 73 in the captured image obtained in step S120 (step S140). Note that, in step S140, the plurality of learning images 54 are extracted from a portion corresponding to the above-described tint normal portion in the captured image for the test pattern 73. Accordingly, the plurality of learning images 54 extracted as the learning data do not include an image representing the ejection failure of the nozzle. After step S140 ends, the processing proceeds to step S20 in Fig. 16.

After the preparation of the learning data, unsupervised learning using the auto encoder AE is performed (step S20). In step S20, the unsupervised learning as the machine learning is performed by sequentially giving the plurality of learning images 54 prepared as the learning data in step S10 to the auto encoder AE. Unsupervised learning using a large number of learning images 54 is performed, and thus, the parameters (weighting factor or bias) of the auto encoder AE are optimized. In this manner, the trained model 55 constituted by the auto encoder AE is generated.

Incidentally, a shape of the image formed on the printing paper 5 by ejecting the ink from the nozzles may vary depending on the printing condition. Therefore, in the present embodiment, the unsupervised learning using the auto encoder AE is performed for each printing condition. In this regard, for example, one printing condition is defined by a combination of a type of the printing medium, a printing speed, and a printing resolution. In a case where 10 printing conditions are used in a printing system in a certain printing company, the unsupervised learning using the auto encoder AE is performed for each of the 10 printing conditions. In this case, in step S20, 10 trained models 55 corresponding to the 10 printing conditions are generated.

After the trained model 55 is generated, the ink ejection control unit 152 controls the ejection of the ink from each nozzle based on the test pattern data 51a stored in the data storage unit 155, and thus, the inspection chart 71 schematically illustrated in Fig. 11 including only the test pattern (stepwise pattern) 73 is printed (step S30). The in-line scanner 40 captures the print image (the print image obtained in step S30) of the test pattern 73 under the control by the imaging control unit 154 (step S40). Subsequently, the image cutting unit 630 cuts out the plurality of partial images 57 each corresponding to the N nozzles from the captured image 56 obtained in step S40 (step S50).

After the plurality of partial images 57 are cut out from the captured image 56, each of the plurality of partial images 57 serving as the image to be inspected is given, as the input data, to the auto encoder AE constituting the trained model 55 (step S60). As a result, output data corresponding to each partial image 57 is outputted from the auto encoder AE. Note that, in step S60, the trained model 55 corresponding to the printing condition when the test pattern 73 is printed in step S30 is used.

Thereafter, the error calculation unit 642 calculates the mean square error 59 between the input data to the auto encoder AE and the output data 58 from the auto encoder AE for each of the plurality of partial images 57 (step S70).

Finally, the comparison and determination unit 643 compares the mean square error 59 calculated in step S70 with the above-described threshold set in advance as the parameter, and determines whether or not the ejection failure nozzle is included in the N nozzles corresponding to the partial images 57 (each input data) based on the comparison result (step S80). In step S80, when the mean square error 59 is larger than the threshold, it is determined that the ejection failure nozzle is included in the N nozzles corresponding to the partial images 57 (input data). Note that, in a case where each partial image 57 corresponds to one nozzle, the ejection failure nozzle is specified by the processing of step S80. In contrast, in a case where each partial image 57 corresponds to two or more nozzles, after step S80, processing of specifying the ejection failure nozzle in consideration of the result obtained in the processing of step S80 is performed by the ejection failure nozzle specifying unit 651 (not illustrated in Fig. 16).

After processing of detecting the ejection failure nozzle is performed in the above procedure, the print data is corrected such that the ejection failure of the nozzle specified as the ejection failure nozzle is compensated (print data correction step). As a result, a high-quality printed matter can be obtained even though there is the ejection failure nozzle.

Regarding the series of processing performed in the procedure illustrated in Fig. 16, the processing in steps S10 to S20 is the learning processing, and the processing in steps S30 to S80 is the inference processing. When the learning processing is completed and the trained model 55 is generated, it is possible to repeat only the inference processing. Further, even though the trained model 55 is once generated, detection accuracy of the ejection failure of the nozzle can be enhanced by further repeating the learning processing.

Note that, in the present embodiment, a learning image preparation step is realized in step S10, a model generation step is realized in step S20, a test pattern printing step is realized in step S30, a capturing step is realized in step S40, an image cutting step is realized in step S50, and an ejection failure determination step is realized in steps S60 to S80. In addition, a pre-learning printing step is realized in step S110, a pre-learning capturing step is realized in step S120, and a learning image extraction step is realized in steps S130 and S140.

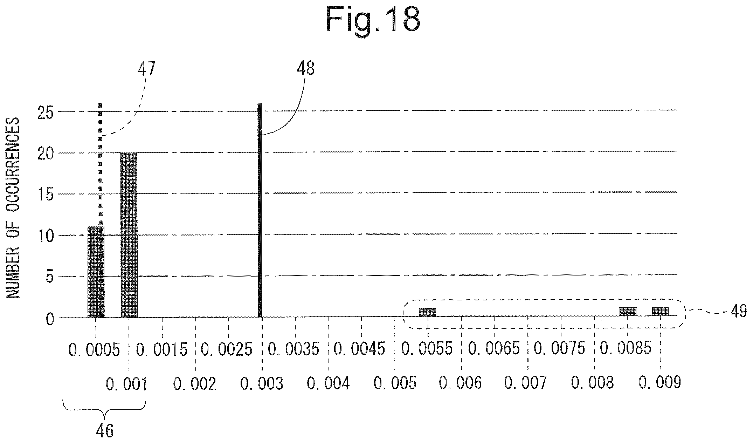

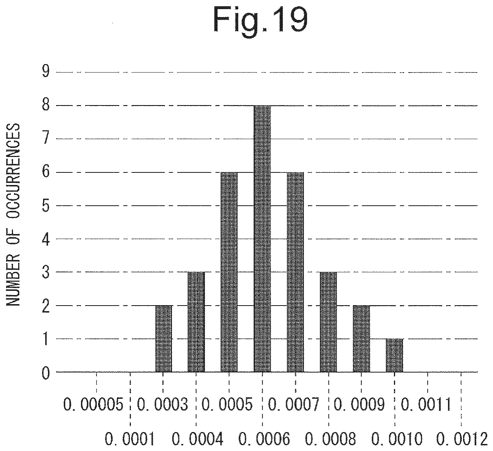

Here, the setting of the threshold as the parameter will be described with reference to Figs. 18 and 19. The number of occurrences (frequency) of the mean square error for each certain numerical range is illustrated in Fig. 18, and details of a portion denoted by reference character 46 in Fig. 18 are illustrated in Fig. 19. Data present in a dotted line portion denoted by reference character 49 in Fig. 18 is data corresponding to the ejection failure nozzle. A dotted line denoted by reference character 47 in Fig. 18 represents an average value of mean square errors (of normal data). In a normal distribution, a probability that each data exceeds a range (however, one side) of 4σ (σ: standard deviation) from the average value is 1/30,000. This fact corresponds to a level at which there is one ejection failure nozzle in a 20-inch head unit. For example, in consideration of the above, a value obtained by adding 4σ to the average value of the mean square errors (a value represented by a solid line denoted by reference character 48 in Fig. 18) can be set as the threshold. Note that, this example shown here is an example, and the method for setting the threshold is not particularly limited.

### <6. Cutout of image>

In the present embodiment, the images (the learning images 54, the partial images 57) are cut out from the captured image during the learning processing and during the inference processing. In this regard, in order to efficiently perform training of the auto encoder AE and accurately detect the ejection failure nozzle by using the auto encoder AE, it is preferable to determine in advance the number of linear patterns to be included in the cutout image and a reference position (for example, a center position) in cutting out the image from the captured image. Thus, hereinafter, a range (a cutout range of the image) of one image to be cut out from the captured image, a reference position (hereinafter, referred to as a "cutout reference position") when the image is cut out, and the like will be described.

### <6.1 Cutout range of image>

Regarding the cutout range of the image, roughly, a method for cutting out an image in a range corresponding to one nozzle as illustrated in Fig. 1, for example, and a method for cutting out an image in a range corresponding to a plurality of nozzles are considered. In other words, the method for cutting out the image such that only one linear pattern is included in the cutout image and the method for cutting out the image such that the plurality of linear patterns are included in the cutout image are considered. In a case where the method for cutting out the image in the range corresponding to one nozzle is adopted, the plurality of images (the learning images 54, the partial images 57) each corresponding to one nozzle are cut out from the captured image of the test pattern 73 both during the learning processing and during the inference processing. In a case where the method for cutting out the image in the range corresponding to the plurality of nozzles is adopted, the plurality of images (the learning images 54, the partial images 57) each corresponding to two or more nozzles are cut out from the captured image of the test pattern 73 both during the learning processing and during the inference processing.

According to the method for cutting out the image in the range corresponding to one nozzle, since a size (image size) of the input and output data of the auto encoder AE is smaller than that of the method for cutting out the image in the range corresponding to the plurality of nozzles, a processing load on the model generation unit 620 and the ejection failure determination unit 640 is reduced. In addition, even though the cutout reference position is not determined (that is, even though a position of the linear pattern in the image to be inspected differs for each input data), it is possible to relatively accurately determine whether or not the nozzle corresponding to the input data to the auto encoder AE is in the ejection failure state. However, side skipping cannot be detected unless an ideal ejection position to be described later is adopted as the cutout reference position.

According to the method for cutting out the image in the range corresponding to the plurality of nozzles, since a positional relationship between the plurality of linear patterns is learned, the side skipping can be detected even in a case where any of three positions to be described later is adopted as the cutout reference position. In addition, since it is possible to detect non-ejection and shape failure, it is possible to detect the ejection failure of the nozzle regardless of the type thereof.

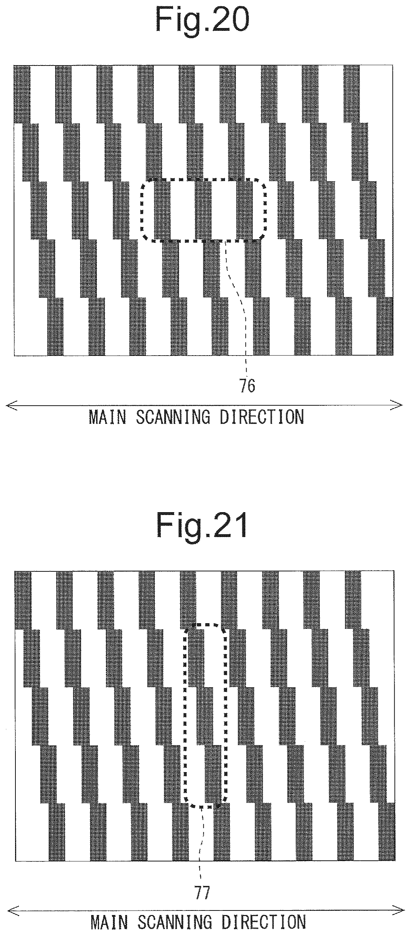

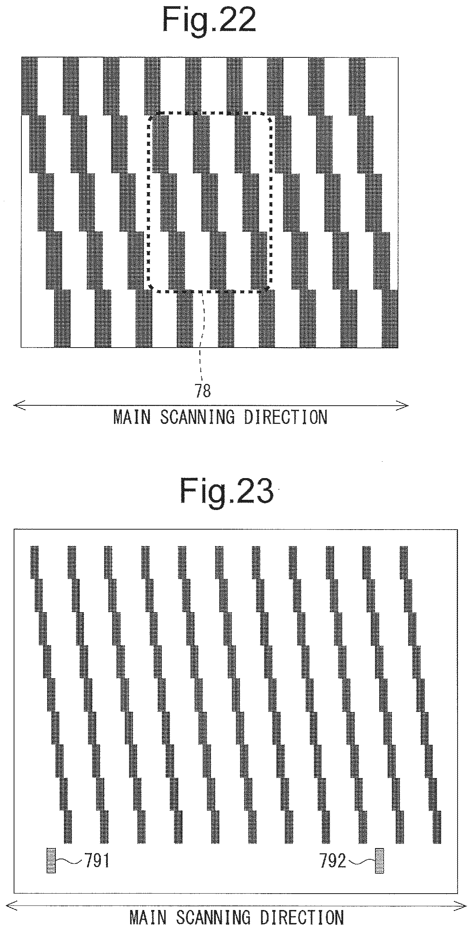

Regarding the cutting out of the image in the range corresponding to the plurality of nozzles, an image in a range corresponding to a plurality of nozzles continuous in the main scanning direction may be cut out, an image in a range corresponding to a plurality of nozzles continuous in the sub-scanning direction may be cut out, or an image in a range corresponding to a plurality of nozzles continuous in both the main scanning direction and the sub-scanning direction may be cut out. For example, the image may be cut out from the captured image such that the cutout image includes three linear patterns (see a thick dotted line portion denoted by reference character 76 in Fig. 20) continuous in the main scanning direction. In a case where the image is cut out in this manner, it is possible to detect dimensional side skipping as can be grasped from Fig. 44. In addition, for example, the image may be cut out from the captured image such that the cutout image includes three linear patterns (see a thick dotted line portion denoted by reference character 77 in Fig. 21) continuous in the sub-scanning direction. In a case where the image is cut out in this manner, it is possible to detect the side skipping that affects the quality, as can be grasped from Fig. 45. In addition, for example, the image may be cut out from the captured image such that the cutout image includes 9 linear patterns of 3 rows × 3 columns (see a thick dotted line portion denoted by reference character 78 in Fig. 22). In a case where the image is cut out in this manner, it is possible to detect the side skipping from a complex viewpoint.

### <6.2 Cutout reference position>

Three positions are considered as the cutout reference position. Hereinafter, three cutting methods (first to third cutting methods) corresponding to the three positions will be described. Note that, in a case where the method for cutting out the image in the range corresponding to one nozzle is adopted (that is, in a case where the above N nozzles are one nozzle), images (the learning images 54, the partial images 57) in a predetermined range are cut out from the captured image with the cutout reference position as a center in step S50 in Fig. 16 and step S140 in Fig. 17. On the other hand, in a case where the method for cutting out the image in the range corresponding to the plurality of nozzles is adopted (that is, in a case where the above N nozzles are two or more nozzles), the images (the learning images 54, the partial images 57) in the predetermined range are cut out from the captured image with the cutout reference position for predetermined one nozzle among the corresponding two or more nozzles as a center, in step S50 of Fig. 16 and step S140 of Fig. 17.

The first cutting method is a method for cutting out the image from the captured image using the position (hereinafter, referred to as a "provisional ejection position") where the ink is assumed to be ejected from each nozzle based on design information of the test pattern 73, as a reference. In this regard, the provisional ejection position is determined, for example, as follows. First, when the test pattern 73 is printed, for example, as illustrated in Fig. 23, position marks 791 and 792 for obtaining the provisional ejection positions is also printed. The number of linear patterns present in a region corresponding to a space between the two position marks 791 and 792 is counted based on the captured image of the print image. Based on a count value (that is, the number of nozzles to eject the ink to the region corresponding to the space between the two position marks 791 and 792) obtained by this and positions (coordinates) of the two position marks 791 and 792, a nozzle pitch (a distance between two nozzles adjacent in the main scanning direction) is obtained. The provisional ejection position for each nozzle configured to eject the ink to the region corresponding to the space between the two position marks 791 and 792 is obtained based on the position (coordinates) of one position mark 791 and the nozzle pitch.

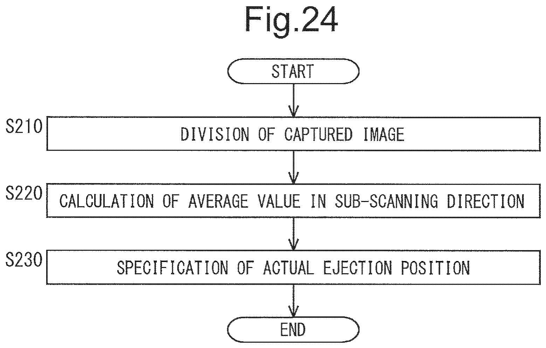

The second cutting method is a method for cutting the image from the captured image using the position (hereinafter, referred to as an "actual ejection position") which is obtained based on the captured image of the print image of the test pattern 73 and where the ink is actually ejected from each nozzle, as a reference. Regarding the second cutting method, a procedure for obtaining the actual ejection position will be described below with reference to a flowchart illustrated in Fig. 24.

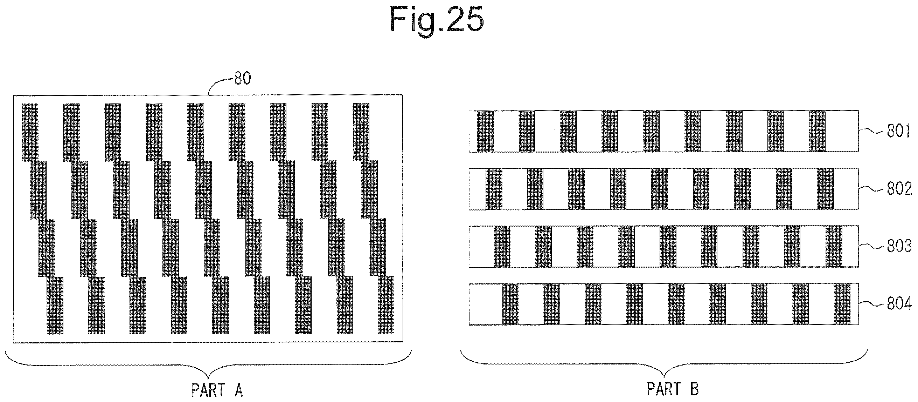

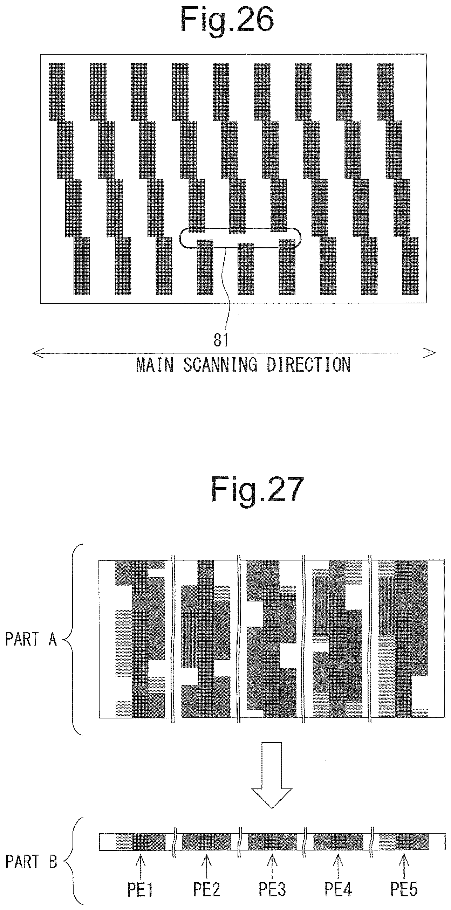

First, the captured image is divided into K portions (divided images) in the sub-scanning direction with K being an integer of 2 or more (step S210). In step S210, a boundary between stages is obtained based on the design information of the test pattern 73 or pixel values of the captured image, and the captured image is divided such that the divided image corresponds to one stage (in other words, the divided image corresponds to one nozzle regarding the sub-scanning direction). For example, in a case where a captured image 80 as illustrated in a part A of Fig. 25 is obtained, the captured image 80 is divided into four divided images 801 to 804 as illustrated in a part B of Fig. 25. Note that, a boundary portion between a certain stage and a next stage contains a lot of noise. For example, as illustrated in a portion denoted by reference character 81 in Fig. 26, a gap due to adjustment of the ink ejection head 251 may occur. Therefore, it is preferable to remove an upper end portion and a lower end portion (that is, the boundary portion between the steps) of the divided image by trimming.

Subsequently, for each of the K divided images obtained in step S210, an average value of data (pixel values) of a plurality of pixels included for the sub-scanning direction is calculated (step S220). This corresponds to, for example, converting a captured image as illustrated in a part A of Fig. 27 into one-dimensional data schematically illustrated in a part B of Fig. 27. Note that, it is preferable to perform normalization to set a paper white portion to zero and a maximum density portion to 255, for example, on the data of the average value obtained in step S220.

Finally, the actual ejection position for each nozzle is obtained based on the average value (preferably, the average value after normalization is performed) calculated in step S220 (step S230). In this regard, a peak position is calculated as a real number by using a method such as gravity center calculation, equiangular linear fitting, spline interpolation, or Gaussian fitting based on values of pixels (for example, pixels denoted by reference characters PE1 to PE5 in a part B of Fig. 27) (for example, based on values of a total of three pixels) in which a peak of the average value is obtained and values of neighboring pixels, and the peak position is determined as the actual ejection position.

Note that, in the present embodiment, a captured image division step is realized in step S210, an average value calculation step is realized in step S220, and an actual ejection position specifying step is realized in step S230.

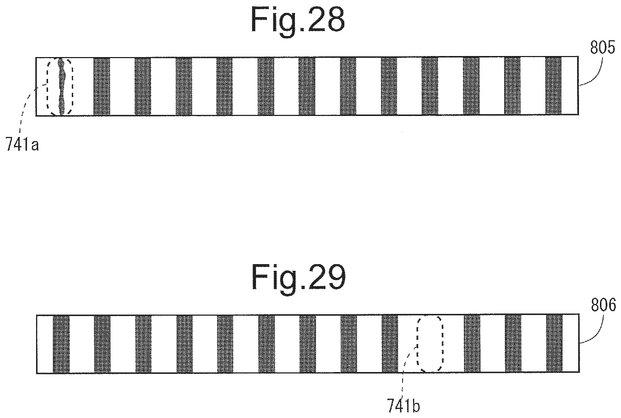

Here, a method for obtaining the actual ejection position in a case where there is a non-ejection nozzle (nozzle causing non-ejection) will be described. In a case where there is the non-ejection nozzle, for example, the "print image of the test pattern 73" as illustrated in Fig. 13 is obtained. The divided image is acquired by executing the processing of step S210 of Fig. 24 (processing of dividing the captured image) on the captured image obtained by capturing the print image of the test pattern 73. Regarding a portion where there is the non-ejection nozzle, a divided image 805 including an abnormal portion 741a in which the linear pattern is printed with a remarkably narrow width as illustrated in Fig. 28, or a divided image 806 including an abnormal portion 741b in which the linear pattern is not printed at all as illustrated in Fig. 29 is obtained.

In a case where the processing of step S220 of Fig. 24 (processing of calculating the average value regarding the sub-scanning direction) is executed for the divided image 805 and the divided image 806, a peak of the average value is detected for a normal portion excluding the abnormal portions 741a and 741b. On the other hand, the peak of the average value is not detected for the abnormal portions 741a and 741b. It is determined that there is a non-ejection nozzle for the portion where the peak of the average value is not detected, and the portion is excluded from a target of the processing of step S230 of Fig. 24 (processing of specifying the actual ejection position). As a result, cutting out the partial image (step S50 in Fig. 16) cannot be performed with the positions of the nozzles corresponding to the abnormal portions 741a and 741b as the cutout reference position, and it is determined that there is a non-ejection nozzle.

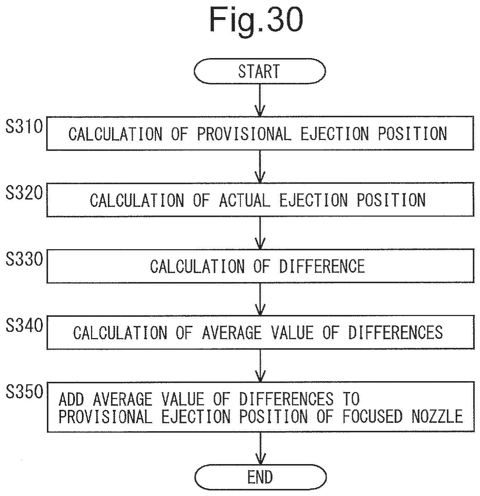

The third cutting method is a method for cutting the image from the captured image using an ideal position (hereinafter, referred to as an "ideal ejection position") where the ink is ejected from each nozzle, as a reference. Regarding the third cutting method, a procedure for obtaining the ideal ejection position of a certain nozzle (hereinafter, referred to as a "focused nozzle") will be described below with reference to a flowchart illustrated in Fig. 30.

First, based on the design information of the test pattern 73, the provisional ejection positions (positions where the ink is assumed to be ejected) for the focused nozzle and each of a predetermined number of nozzles near the focused nozzle are obtained by the procedure as described above (step S310). Hereinafter, the predetermined number of nozzles near the focused nozzle will be referred to as a "neighboring nozzle group". When the main scanning direction is referred to as a "left and right direction", for example, nozzles up to five ahead in a left direction with respect to the focused nozzle and nozzles up to five ahead in a right direction with respect to the focused nozzle are regarded as the neighboring nozzle group. However, in a case where the focused nozzle is positioned at a left end portion, for example, nozzles up to five ahead in the right direction with respect to the focused nozzle are regarded as the neighboring nozzle group, and in a case where the focused nozzle is positioned at a right end portion, for example, nozzles up to five ahead in the left direction with respect to the focused nozzle are regarded as the neighboring nozzle group. After the provisional ejection position is obtained, the actual ejection position (the position where the ink is actually ejected) of each of the plurality of nozzles included in the neighboring nozzle group is obtained by the procedure described above based on the captured image (step S320). Subsequently, a difference between the provisional ejection position and the actual ejection position is calculated for each of the plurality of nozzles included in the neighboring nozzle group (step S330). Thereafter, an average value of differences calculated in step S330 is calculated (step S340). Finally, the average value calculated in step S340 is added to the provisional ejection position for the focused nozzle to obtain the ideal ejection position for the focused nozzle (step S350).

Note that, in the present embodiment, a provisional ejection position calculation step is realized in step S310, an actual ejection position calculation step is realized in step S320, a difference calculation step is realized in step S330, a difference average calculation step is realized in step S340, and an ideal ejection position specifying step is realized in step S350.

Here, a method for obtaining the ideal ejection position in a case where there is the non-ejection nozzle will be described. The non-ejection nozzle is detected in the processing of step S320 of Fig. 30 (processing of calculating the actual ejection position). In this case, for example, one of the plurality of nozzles included in the neighboring nozzle group is detected as the non-ejection nozzle. Then, the processing of step S330 of Fig. 30 (processing of calculating the difference) is executed in a state where the non-ejection nozzle is excluded from the neighboring nozzle group. As a result, the difference between the provisional ejection position and the actual ejection position is calculated for, for example, each of nine nozzles which are obtained by excluding the non-ejection nozzle from the neighboring nozzle group. The processing of steps S340 and S350 thereafter is the same as in a case where the non-ejection nozzle is not detected. In this manner, the ideal ejection position for the focused nozzle described above is determined.

### <6.3 About case where range corresponding to plurality of nozzles is cut out in sub-scanning direction>

In a case where the range corresponding to the plurality of nozzles continuous in the sub-scanning direction, for example, as illustrated in Figs. 21 and 22 is set as the cutout range of the image, the captured image may be reconstructed as follows before the image is cut out.

First, a captured image including a plurality of stages is divided into a plurality of divided images for respective stages. Subsequently, since a boundary portion between a certain stage and a next stage contains a lot of noise as described above, the boundary portion is removed by trimming. Specifically, for each of the plurality of divided images, upstream and downstream end portions for the sub-scanning direction are removed by trimming. Finally, the plurality of divided images from which the boundary portion is removed as described above (that is, the plurality of divided images after upstream and downstream end portions for the sub-scanning direction are deleted) are coupled. In this manner, the captured image is reconstructed.

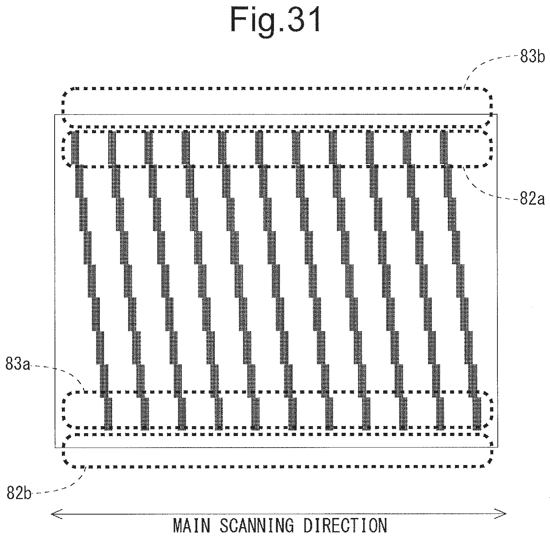

Meanwhile, in a case where a range corresponding to three nozzles continuous in the sub-scanning direction is set as the cutout range of the image, it is not possible to perform desired cutout with a nozzle corresponding to an uppermost stage or a nozzle corresponding to a lowermost stage as a center. Thus, the image at the uppermost stage (the image at a position denoted by reference character 82a in Fig. 31) may be copied to a position below the lowermost image (a position denoted by reference character 82b in Fig. 31), and the lowermost image (the image at a position denoted by reference character 83a in Fig. 31) may be copied to a position above the uppermost image (a position denoted by reference character 83b in Fig. 31). In other words, before the images (the learning images 54, the partial images 57) are cut out from the captured image, an image at a stage positioned on a most upstream side in the sub-scanning direction in the captured image is preferably copied to a further downstream side at a stage positioned on a most downstream side in the sub-scanning direction, and an image at a stage positioned on the most downstream side in the sub-scanning direction in the captured image is preferably copied to a further upstream side at a stage positioned on the most upstream side in the sub-scanning direction. Note that, in order to obtain a print image corresponding to such an image after copying, the ink may be ejected from each of nozzles corresponding to the uppermost stage and each of nozzles corresponding to the lowermost stage when the test pattern 73 is printed.

### <6.4 About edge portion of captured image>

In a case where the method of cutting out the image in the range corresponding to the plurality of nozzles is adopted, it is considered that the detection accuracy of the ejection failure is lower in an edge portion of the captured image than in other portions. Therefore, the following processing may be performed for the edge portion. During the learning processing, for example, the trained model 55 for the edge portion is generated by cutting out the learning images 54 from the captured image by using each of four corners of the captured image as the cutout reference position and executing the unsupervised learning by the auto encoder AE by using the learning images 54. During the inference processing, the ejection failure nozzle is detected by cutting out the partial images 57 from the captured image in the same manner as during the learning processing and giving the partial images 57 as the input data to the auto encoder AE constituting the trained model 55 for the edge portion.

### <6.5 Method for cutting out image (partial image) and specification of ejection failure nozzle during inference processing>

Regarding a case where the image in the range corresponding to the plurality of nozzles is cut out (that is, a case where the above N nozzles are two or more nozzles), a method for cutting out the partial images 57 from the captured image 56 and specification of the ejection failure nozzle during the inference processing will be described. Regarding the case where the image in the range corresponding to the plurality of nozzles, the method (hereinafter, referred to as a "processing time priority cutting method" for the sake of convenience) of cutting out the plurality of partial images 57 from the captured image 56 such that the image corresponding to each nozzle is cut out only once (in other words, the plurality of partial images 57 are cut out from the captured image 56 such that the linear pattern corresponding to each nozzle is included in only one partial image 57) may be adopted, or a method (hereinafter, referred to as an "accuracy priority cutting method" for the sake of convenience) of cutting out the plurality of partial images 57 from the captured image 56 such that the image corresponding to each of all the nozzles (however, the nozzle corresponding to the linear pattern positioned at the end portion of the captured image 56 is excluded) is positioned at a center (a center of the images after being cut out) once may be adopted. According to the accuracy priority cutting method, with the nozzle corresponding to the linear pattern included in the stage positioned on the most upstream side in the sub-scanning direction in the captured image 56, the nozzle corresponding to the linear pattern included in the stage positioned on the most downstream side in the sub-scanning direction in the captured image 56, and the nozzles corresponding to the linear patterns positioned at both end portions of each stage regarded as end portion nozzles, in cutting out the plurality of partial images 57 from the captured image 56, positions corresponding to all the nozzles excluding the end portion nozzles among the plurality of nozzles included in the head unit 25 are used as a reference once each.

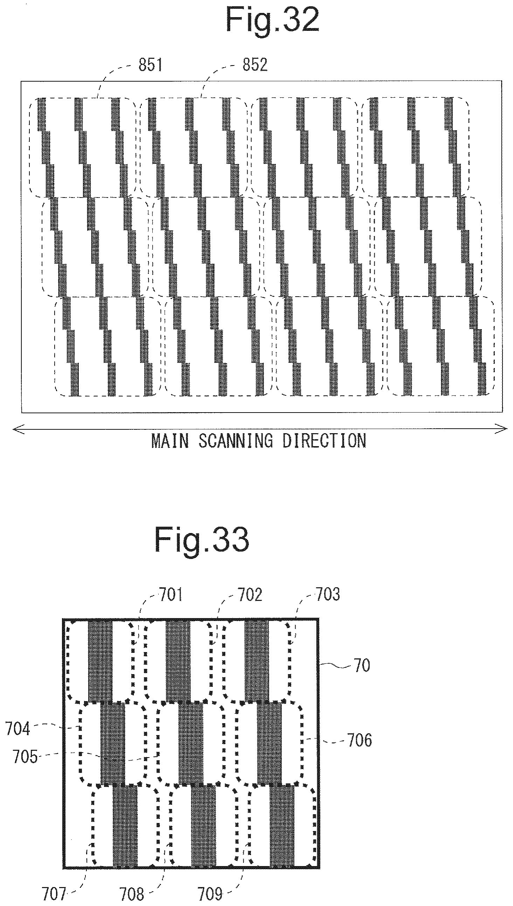

In a case where the processing time priority cutting method is adopted, for example, a partial image of a dotted line portion denoted by reference character 851 in Fig. 32 is cut out, and then a partial image of a dotted line portion denoted by reference character 852 in Fig. 32 is cut out. According to this method, a processing time required for cutting out the plurality of partial images 57 from the captured image 56 is shortened. In a case where cutting out the partial image 57 is performed by this method, the detection and specification of the ejection failure nozzle in the inference processing is performed as follows. First, the ejection failure determination unit 640 determines whether or not there is the ejection failure nozzle based on the mean square error between the input data to the auto encoder AE and the output data from the auto encoder AE in the entire partial image. As a result, when it is determined that there is the ejection failure nozzle (in other words, when the mean square error is larger than the predetermined threshold), the ejection failure nozzle specifying unit 651 divides the corresponding entire partial image for both the input data and the output data into N images each for one nozzle (hereinafter, each of the N images is referred to as a "nozzle unit image"), obtains a mean square error between the input data and the output data for each nozzle unit image, and specifies the ejection failure nozzle based on a result of comparing the mean square error with a threshold (comparison threshold for each nozzle unit image) (this threshold is also set as a parameter). At this time, the nozzle corresponding to the nozzle unit image for which the result that the mean square error is larger than the threshold is obtained is specified as the ejection failure nozzle. For example, in a case where an image of a thick solid line portion denoted by reference character 70 in Fig. 33 is cut out as the partial image, first, it is determined whether or not there is the ejection failure nozzle based on the entire partial image. As a result, when it is determined that there is the ejection failure nozzle, the partial image 70 is divided into nine nozzle unit images 701 to 709 for both the input data and the output data. For each of the nine nozzle unit images 701 to 709, the mean square error between the input data and the output data is compared with the threshold. As the result of comparing the mean square error with the threshold, in a case where the result that the mean square error is larger than the threshold is obtained for the nozzle unit image 706, the nozzle corresponding to the nozzle unit image 706 is specified as the ejection failure nozzle. In addition, in a case where the result that the mean square error is larger than the threshold is obtained for the nozzle unit image 701 and the nozzle unit image 709, the nozzle corresponding to the nozzle unit image 701 and the nozzle corresponding to the nozzle unit image 709 are specified as the ejection failure nozzle.

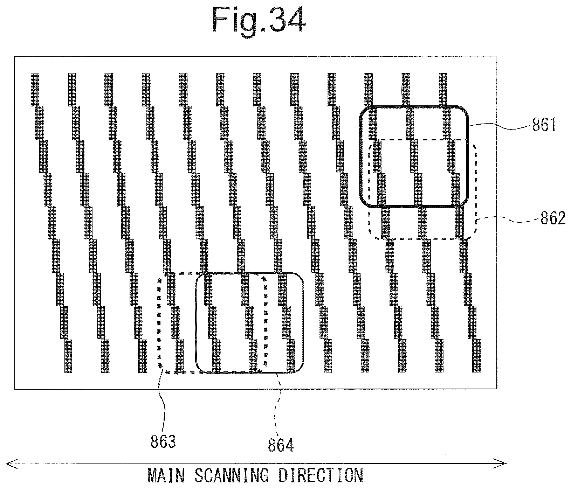

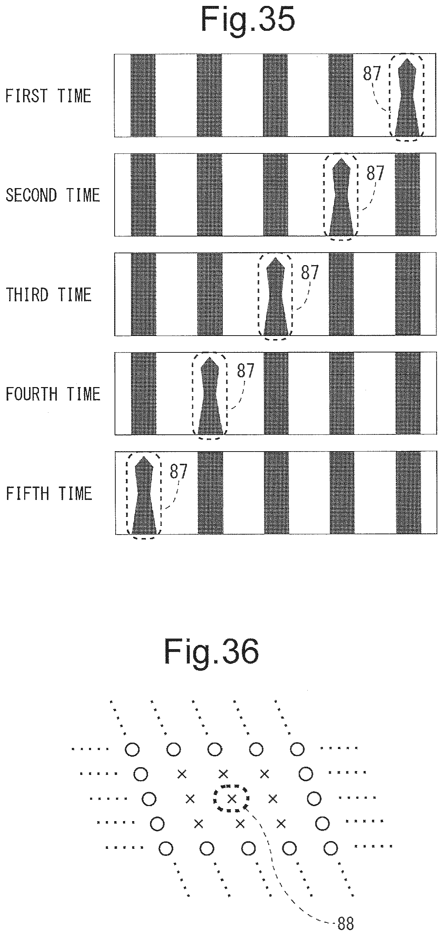

In a case where the accuracy priority cutting method is adopted, for example, even though a partial image of a thick solid line portion denoted by reference character 861 in Fig. 34 is cut out, a partial image of a dotted line portion denoted by reference character 862 in Fig. 34 is also cut out, and even though a partial image of a thick dotted line portion denoted by reference character 863 in Fig. 34 is cut out, a partial image of a solid line portion denoted by reference character 864 in Fig. 34 is also cut out. According to this method, the position of the ejection failure nozzle can be accurately specified. For example, in a case where a partial image in a range corresponding to five nozzles continuous in the main scanning direction is cut out during the inference processing, when an ejection failure as indicated by a dotted line portion denoted by reference character 87 in Fig. 35 occurs, a portion where the ejection failure occurs gradually moves as illustrated in Fig. 35 in five inspection results. In this case, a result that the mean square error is larger than the threshold is obtained five times in succession. Based on this result, the ejection failure nozzle is specified by the ejection failure nozzle specifying unit 651. In addition, in a case where a partial image including nine linear patterns of 3 rows × 3 columns is cut out during the inference processing, it is assumed that a result illustrated in Fig. 36 is obtained when an inspection result for each partial image including nine linear patterns is represented in association with a linear pattern positioned at a center of each partial image. Note that, in Fig. 36, "∘" indicates that the ejection failure is not detected, and "×" indicates that the ejection failure is detected. In this case, the ejection failure nozzle specifying unit 651 can determine that the nozzle that has recorded the linear pattern corresponding to the result indicated by reference character 88 in Fig. 36 is in the ejection failure state. From the above, it can be grasped that the ejection failure nozzle is specified based on an overlapping state of two or more partial images in which it is determined that the ejection failure nozzle is included in the corresponding N nozzles in step S80 of Fig. 16.

### <6.6 Type of ejection failure detectable for each combination of cutout range of image and cutout reference position>

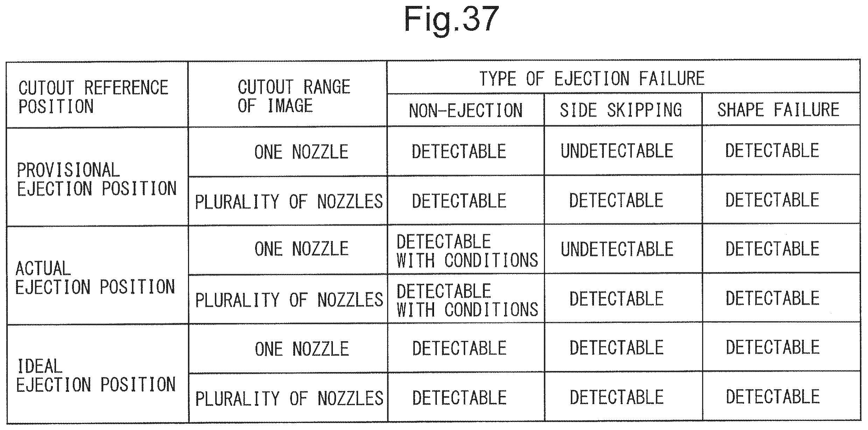

Fig. 37 illustrates a relationship between the combination of the cutout range of the image and the cutout reference position and the type of the detectable ejection failure. Regarding each of all combinations, the shape failure can be detected. In a case where the actual ejection position is adopted as the cutout reference position, the non-ejection can be detected with conditions. In this regard, specifically, if it is possible to determine, without the processing of steps S60 to S80 of Fig. 16, that the corresponding nozzle is the non-ejection when a peak of the average value is not obtained in step S230 of Fig. 24, it is possible to detect the non-ejection. Regarding the side skipping, when the cutout range of the image is the range corresponding to the plurality of nozzles, the positional relationship between the plurality of linear patterns is learned by the auto encoder AE, and thus, the side skipping can be detected even in a case where any cutout reference position is adopted. However, when the cutout range of the image is the range corresponding to one nozzle, the side skipping can be detected only in a case where the ideal ejection position is adopted as the cutout reference position. In this regard, in a case where the ideal ejection position is adopted as the cutout reference position, even though the side skipping occurs for a certain nozzle, deviation (deviation due to the side skipping) does not occur in the cutout position in cutting out partial image corresponding to the certain nozzle from the captured image. Accordingly, even though the cutout range of the image is the range corresponding to one nozzle, it is possible to detect the side skipping.

### <7. Effects>

According to the present embodiment, the trained model 55 for detecting the ejection failure of the nozzle is generated by performing the unsupervised learning by the auto encoder AE by using only an image representing a favorable ejection state. As a result, when the input data given to the auto encoder AE constituting the trained model 55 is the image in which the ejection failure does not occur, the error between the input data and the output data becomes small, and when the input data given to the auto encoder AE constituting the trained model 55 is the image in which the ejection failure occurs, the error between the input data and the output data becomes large. Accordingly, as long as the threshold for comparison with the error is set as a parameter, it is possible to determine whether or not the ejection failure nozzle is included in the N nozzles (one or more nozzles) corresponding to each partial image 57 given as the input data to the auto encoder AE, without requiring setting of other parameters. In addition, although the ejection failure rarely occurs in the inkjet printing apparatus 10, since only the image representing the favorable ejection state is required as the learning data (learning image 54) (in other words, there is no need to collect failure data), a sufficient number of learning data can be easily collected. From the above, according to the present embodiment, regarding the inkjet printing apparatus 10, it is possible to accurately detect the ejection failure of the nozzle without requiring a large amount of time and effort for generating and collecting learning data and setting the parameter. In addition, since the occurrence of the detection omission of the ejection failure due to the insufficient setting of the parameter is suppressed, wasteful consumption of the printing paper 5 and the ink due to reprinting is suppressed. Thus, it is possible to contribute to the achievement of sustainable development goal (SDG).

### <8. Modification>

Although the unsupervised learning using the auto encoder AE is executed for each printing condition in the above embodiment, the present invention is not limited thereto. Thus, four modifications (first to fourth modifications) regarding the execution of the unsupervised learning will be described below.

### <8.1 First modification>

When the unsupervised learning is performed for each of all printing conditions as in the above embodiment, a processing load may become excessive. Therefore, a plurality of printing conditions similar to each other may be combined into one condition to perform the unsupervised learning. That is, in the present modification, one or more printing conditions are set as a printing condition group, and the unsupervised learning using the auto encoder AE is performed for each printing condition group. As a result, in step S20 of Fig. 16, the trained model 55 is generated for each printing condition group. In step S60 of Fig. 16, the trained model 55 corresponding to the print condition group including the print condition when the test pattern 73 is printed in step S30 of Fig. 16 is used.

### <8.2 Second modification>

The shape of the image formed on the printing paper 5 by ejecting the ink from the nozzles may vary depending on the type of the ink. Thus, in the present modification, the unsupervised learning using the auto encoder AE is performed for each type of ink. As a result, in step S20 of Fig. 16, the trained model 55 is generated for each type of ink. In step S60 of Fig. 16, the trained model 55 corresponding to the type of ink used when the test pattern 73 is printed in step S30 of Fig. 16 is used.

### <8.3 Third modification>

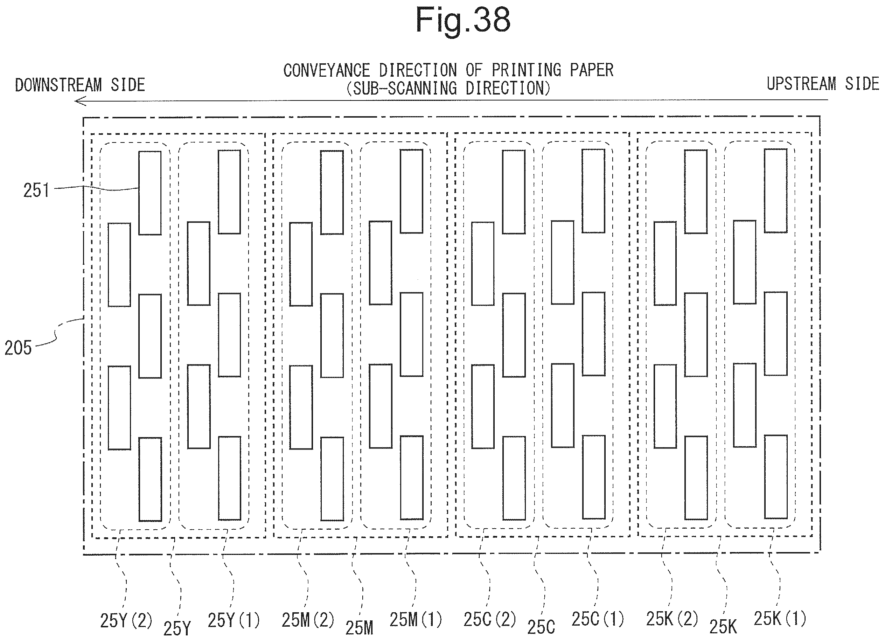

Fig. 38 is a plan view illustrating a configuration example of the recording unit 205 according to the present modification. Unlike the above embodiment, the head unit 25 for each color includes a first head group disposed on an upstream side in the sub-scanning direction and a second head group disposed on a downstream side in the sub-scanning direction. For example, the K color head unit 25 K includes a K color first head group 25K(1) disposed on the upstream side in the sub-scanning direction and a K color second head group 25K(2) disposed on the downstream side in the sub-scanning direction. In the example illustrated in Fig. 38, both the first head group and the second head group are constituted by five ink ejection heads 251 disposed in a staggered manner. For example, both the ink ejection head 251 included in the first head group and the ink ejection head 251 included in the second head group can perform printing of 600 dpi, and both the ink ejection heads can perform printing of 1200 dpi. Note that, the ink ejection head 251 included in the first head group corresponds to an upstream ink ejection head, and the ink ejection head 251 included in the second head group corresponds to a downstream ink ejection head.

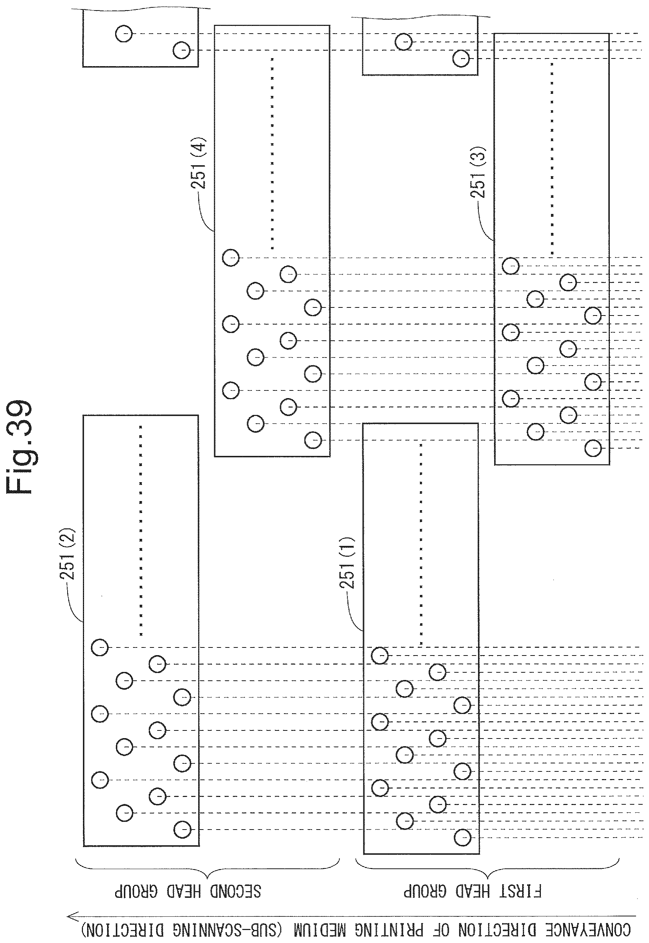

Fig. 39 is a diagram illustrating a detailed configuration of the head unit 25 according to the present modification. Regarding a portion illustrated in Fig. 39, an ink ejection head 251(1) and an ink ejection head 251(3) are included in the first head group, and an ink ejection head 251(2) and an ink ejection head 251(4) are included in the second head group. It can be grasped from Fig. 39 that landing positions of ink ejected from nozzles included in the first head group and the landing positions of the ink ejected from nozzles included in the second head group are alternately arranged in the main scanning direction. When printing is performed, for each region on the printing paper 5, the ink is first ejected from the nozzles included in the first head group, and then the ink is ejected from the nozzles included in the second head group. Therefore, hereinafter, the nozzles included in the first head group are referred to as "pre-shot nozzles", and the nozzles included in the second head group are referred to as "post-shot nozzles".

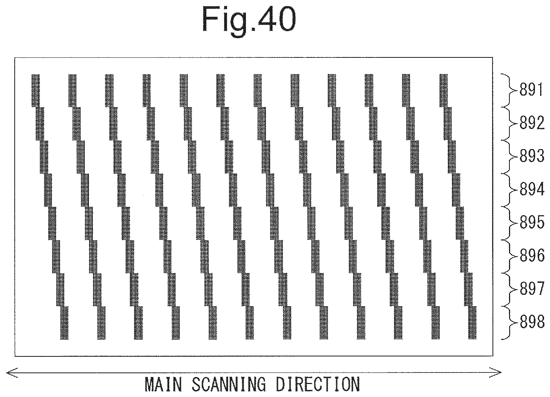

In the present modification, the test pattern 73 as illustrated in Fig. 40 is printed by using the head unit 25 having the above configuration. In Fig. 40, linear patterns in portions denoted by reference characters 891, 893, 895, and 897 correspond to the pre-shot nozzles, and linear patterns in portions denoted by reference characters 892, 894, 896, and 898 correspond to the post-shot nozzles. Note that, here, it is assumed that a cutout range in cutting out the images (the learning images 54, the partial images 57) from the captured image is the range corresponding to one nozzle.

Under the above assumption, the unsupervised learning using the auto encoder AE is separately performed for the images corresponding to the pre-shot nozzles (the images included in the portions denoted by reference characters 891, 893, 895, and 897 in Fig. 40) and the images corresponding to the post-shot nozzles (the images included in the portions denoted by reference characters 892, 894, 896, and 898 in Fig. 40). As a result, in step S20 of Fig. 16, the trained model 55 corresponding to the first head group and the trained model 55 corresponding to the second head group are generated. In step S60 of Fig. 16, when the nozzle corresponding to the input data is included in the first head group (that is, when the nozzle corresponding to the input data is the pre-shot nozzle), the input data is given to the auto encoder AE constituting the trained model 55 corresponding to the first head group, and when the nozzle corresponding to the input data is included in the second head group (that is, when the nozzle corresponding to the input data is the post-shot nozzle), the input data is given to the auto encoder AE constituting the trained model 55 corresponding to the second head group.

Note that, also in a case where the image is cut out from the captured image such that the cutout image includes the plurality of linear patterns continuous in the main scanning direction (see the thick dotted line portion denoted by reference character 76 in Fig. 20), the unsupervised learning may be separately performed for the images corresponding to the pre-shot nozzles and the images corresponding to the post-shot as described above.

### <8.4 Fourth modification>

In the present modification, the head unit 25 (see Figs. 38 and 39) having the same configuration as in the third modification is adopted. In addition, in the present modification, the images (the learning image 54, the partial images 57) are cut out from the captured image such that the image (cutout image) obtained by the cutting includes nine linear patterns of 3 rows × 3 columns (see the thick dotted line portion denoted by reference character 78 in Fig. 22).

Under the above assumption, the unsupervised learning using the auto encoder AE is separately performed for the cutout images (hereinafter, referred to as "first-type cutout images") in which the image corresponding to the pre-shot nozzle is positioned at the center and the cutout images (hereinafter, referred to as "second-type cutout images") in which the image corresponding to the post-shot nozzle is positioned at the center. As a result, in step S20 of Fig. 16, the trained model 55 corresponding to the first-type cutout images and the trained model 55 corresponding to the second-type cutout images are generated. In step S60 of Fig. 16, the trained model 55 to be used is selected depending on whether the partial image 57 as the input data is the first-type cutout image or the second-type cutout image.

### <9. Others>

In the above embodiment (including the modifications), the inkjet printing apparatus 10 that performs color printing is adopted. However, the present invention is not limited thereto, and an inkjet printing apparatus that performs monochrome printing may be adopted.

In addition, in the above-described embodiment (including the modifications), the inkjet printing apparatus 10 using an aqueous ink is adopted. However, the present invention is not limited thereto, and for example, an inkjet printing apparatus using UV ink (ultraviolet curing ink) such as an inkjet printing apparatus for label printing may be adopted. In this case, instead of the drying mechanism 206, an ultraviolet irradiation mechanism for curing the UV ink on the printing paper 5 by ultraviolet irradiation is provided inside the printing mechanism 201 (see Fig. 5).

### DESCRIPTION OF REFERENCE CHARACTERS

10: INKJET PRINTING APPARATUS
13: PRINT CONTROL PROGRAM
40: IN-LINE SCANNER
55: TRAINED MODEL
71: INSPECTION CHART
72: TINT PATTERN
73: TEST PATTERN
100: PRINT CONTROL DEVICE
156: EJECTION FAILURE DETECTION UNIT
157: PRINT DATA CORRECTION UNIT
200: PRINTER BODY
201: PRINTING MECHANISM
205: RECORDING UNIT
251: INK EJECTION HEAD
610: LEARNING IMAGE GENERATION UNIT
620: MODEL GENERATION UNIT
630: IMAGE CUTTING UNIT
640: EJECTION FAILURE DETERMINATION UNIT
641: SELF-ENCODING UNIT
642: ERROR CALCULATION UNIT
643: COMPARSION AND DETERMINATION UNIT
650: EJECTION FAILURE INFORMATION OUTPUT UNIT
651: EJECTION FAILURE NOZZLE SPECIFYING UNIT
AE: AUTO ENCODER

## Claims

1. An ejection failure detection method for detecting an ejection failure of a nozzle in a printing apparatus including a head unit including a plurality of nozzles configured to eject ink onto a printing medium conveyed in a conveyance direction determined in advance, the method comprising:
a learning image preparation step of preparing a plurality of learning images each formed by ejecting ink from N nozzles, the N being an integer of 1 or more;
a model generation step of generating a trained model constituted by an auto encoder by performing unsupervised learning as machine learning by giving the plurality of learning images to the auto encoder and;
a test pattern printing step of causing the printing apparatus to print a test pattern to be formed by ejecting ink from the plurality of nozzles;
a capturing step of capturing a print image obtained in the test pattern printing step;
an image cutting step of cutting out, from a captured image obtained in the capturing step, a plurality of partial images each corresponding to N nozzles; and
an ejection failure determination step of determining whether or not a nozzle in an ejection failure state is included in N nozzles corresponding to input data based on a result of comparing a value obtained based on output data from the auto encoder and the input data with a threshold set as a parameter, by giving each of the plurality of partial images as the input data to the auto encoder constituting the trained model,
wherein the plurality of learning images do not include an image representing the ejection failure of the nozzle.

2. The ejection failure detection method according to claim 1, wherein
in the model generation step, the trained model is generated for each printing condition by performing unsupervised learning for each printing condition, and
in the ejection failure determination step, the trained model corresponding to a printing condition when the test pattern is printed in the test pattern printing step is used.

3. The ejection failure detection method according to claim 1, wherein
in the model generation step, the trained model is generated for each printing condition group by performing unsupervised learning for each printing condition group, the printing condition group being one or more printing conditions, and
in the ejection failure determination step, the trained model corresponding to a printing condition group including a printing condition when the test pattern is printed in the test pattern printing step is used.

4. The ejection failure detection method according to claim 1, wherein
in the model generation step, the trained model is generated for each type of ink by performing unsupervised learning for each type of ink, and
in the ejection failure determination step, the trained model corresponding to a type of ink used when the test pattern is printed in the test pattern printing step is used.

5. The ejection failure detection method according to claim 1, wherein in the image cutting step, each of the plurality of partial images is cut out from the captured image using a provisional ejection position for predetermined one nozzle among corresponding N nozzles as a reference, the provisional ejection position being a position where ink is assumed to be ejected from each nozzle based on design information of the test pattern.

6. The ejection failure detection method according to claim 5, wherein
in the image cutting step,
a nozzle pitch, which is a distance between two adjacent nozzles in a direction orthogonal to the conveyance direction, is obtained based on positions of two position marks included in the captured image and a number of nozzles to eject ink to a region corresponding to a space between the two position marks, and
the provisional ejection position for each nozzle is obtained by using the nozzle pitch.

7. The ejection failure detection method according to claim 1, wherein
in the image cutting step,
an actual ejection position where ink is actually ejected from each nozzle is obtained based on the captured image, and
each of the plurality of partial images is cut out from the captured image using the actual ejection position for predetermined one nozzle among corresponding N nozzles as a reference.

8. The ejection failure detection method according to claim 7, wherein
the image cutting step includes:
a captured image division step of dividing the captured image into K divided images in the conveyance direction such that each of K divided images corresponds to one nozzle in the conveyance direction, the K being an integer of 2 or more,
an average value calculation step of calculating an average value of data of a plurality of pixels included for the conveyance direction for each of the K divided images obtained in the captured image division step, and
an actual ejection position specifying step of obtaining the actual ejection position for each nozzle based on the average value calculated in the average value calculation step.

9. The ejection failure detection method according to claim 1, wherein in the image cutting step, each of the plurality of partial images is cut out from the captured image using an ideal ejection position for predetermined one nozzle among corresponding N nozzles as a reference, the ideal ejection position being an ideal position where ink is ejected from each nozzle.

10. The ejection failure detection method according to claim 9, wherein
the image cutting step includes:
a provisional ejection position calculation step of obtaining, as a provisional ejection position, each of positions where ink is assumed to be ejected from a focused nozzle and a predetermined number of nozzles near the focused nozzle based on design information of the test pattern, the focused nozzle being a nozzle for which the ideal ejection position is to be obtained among the plurality of nozzles,
an actual ejection position calculation step of obtaining an actual ejection position where ink is actually ejected from each of the predetermined number of nozzles near the focused nozzle based on the captured image,
a difference calculation step of calculating a difference between the provisional ejection position and the actual ejection position for each of the predetermined number of nozzles near the focused nozzle,
a difference average calculation step of calculating an average value of differences calculated in the difference calculation step, and
an ideal ejection position specifying step of obtaining the ideal ejection position for the focused nozzle by adding the average value calculated in the difference average calculation step to the provisional ejection position for the focused nozzle.

11. The ejection failure detection method according to claim 1, wherein
the learning image preparation step includes:
a pre-learning printing step of causing the printing apparatus to print the test pattern and a tint pattern, which is to be formed by ejecting ink from the plurality of nozzles and has a constant density as a whole,
a pre-learning capturing step of capturing a print image obtained in the pre-learning printing step so as to obtain a first partially captured image that is a captured image corresponding to the tint pattern and a second partially captured image that is a captured image corresponding to the test pattern, and
a learning image extraction step of extracting the plurality of learning images from a portion corresponding to a tint normal portion in the second partially captured image, the tint normal portion being a portion excluding an abnormal portion in the first partially captured image obtained in the pre-learning capturing step.

12. The ejection failure detection method according to claim 1, wherein
the input data and the output data are constituted by data of a plurality of pixels,
the ejection failure determination step includes:
a self-encoding step of obtaining the output data by giving each of the plurality of partial images as the input data to the auto encoder constituting the trained model,
an error calculation step of calculating a mean square error between the input data and the output data, and
a comparison and determination step of determining whether or not the nozzle in the ejection failure state is included in the N nozzles corresponding to the input data based on a result of comparing the mean square error with the threshold, and
in the comparison and determination step, when the mean square error is larger than the threshold, it is determined that the nozzle in the ejection failure state is included in the N nozzles corresponding to the input data.

13. The ejection failure detection method according to claim 1, wherein
in the learning image preparation step, the plurality of learning images each formed by ejecting ink from one nozzle are prepared, and
in the image cutting step, the plurality of partial images each corresponding to one nozzle are cut out from the captured image.

14. The ejection failure detection method according to any one of claims 1 to 13, further comprising a print data correction step of correcting, based on a result obtained in the ejection failure determining step, print data for controlling the ejection of ink from the plurality of nozzles such that the ejection failure of the nozzle is compensated.

15. A printing apparatus comprising:
a head unit including a plurality of nozzles configured to eject ink onto a printing medium conveyed in a conveyance direction determined in advance;
an imaging device configured to capture a print image; and
a control unit configured to control ejection of ink from the plurality of nozzles and capturing of the print image by the imaging device,
wherein
the control unit includes:
a model generation unit configured to generate a trained model constituted by an auto encoder by performing unsupervised learning as machine learning by giving a plurality of learning images each formed by ejecting ink from N nozzles to the auto encoder, the N being an integer of 1 or more,
an image cutting unit configured to cut out, from a captured image obtained by the imaging device capturing a print image of a test pattern to be formed by ejecting ink from the plurality of nozzles, a plurality of partial images each corresponding to N nozzles, and
an ejection failure determination unit configured to determine whether or not a nozzle in an ejection failure state is included in N nozzles corresponding to input data based on a result of comparing a value obtained based on output data from the auto encoder and the input data with a threshold set as a parameter, by giving each of the plurality of partial images as the input data to the auto encoder constituting the trained model, and
the plurality of learning images do not include an image representing an ejection failure of the nozzle.

16. The printing apparatus according to claim 15, wherein
the head unit includes an upstream ink ejection head disposed on an upstream side in the conveyance direction and a downstream ink ejection head disposed on a downstream side in the conveyance direction,
the model generation unit generates a trained model corresponding to the upstream ink ejection head and a trained model corresponding to the downstream ink ejection head by separately performing unsupervised learning on an image corresponding to a nozzle included in the upstream ink ejection head and an image corresponding to a nozzle included in the downstream ink ejection head,
each of the plurality of partial images cut out by the image cutting unit corresponds to one nozzle, and
the ejection failure determination unit
gives the input data to the auto encoder constituting the trained model corresponding to the upstream ink ejection head when a nozzle corresponding to the input data is included in the upstream ink ejection head, and
gives the input data to the auto encoder constituting the trained model corresponding to the downstream ink ejection head when the nozzle corresponding to the input data is included in the downstream ink ejection head.

17. The printing apparatus according to claim 15, wherein
the control unit further includes a learning image generation unit configured to generate the plurality of learning images,
a first partially captured image that is a captured image corresponding to a tint pattern, which is to be formed by ejecting ink from the plurality of nozzles and has a constant density as a whole, and a second partially captured image that is a captured image corresponding to a test pattern are obtained by the imaging device capturing a print image of the test pattern and a print image of the tint pattern, and
the learning image generation unit extracts the plurality of learning images from a portion corresponding to a tint normal portion in the second partially captured image, the tint normal portion being a portion excluding an abnormal portion in the first partially captured image.

18. The printing apparatus according to claim 15, wherein
the input data and the output data are constituted by data of a plurality of pixels,
the ejection failure determination unit includes:
a self-encoding unit configured to receive each of the plurality of partial images as the input data and output the output data, the self-encoding unit including the auto encoder,
an error calculation unit configured to calculate a mean square error between the input data and the output data, and
a comparison and determination unit configured to determine whether or not the nozzle in the ejection failure state is included in the N nozzles corresponding to the input data based on a result of comparing the mean square error with the threshold, and
the comparison and determination unit determines that the nozzle in the ejection failure state is included in the N nozzles corresponding to the input data when the mean square error is larger than the threshold.

19. The printing apparatus according to any one of claims 15 to 18, wherein the control unit further includes a print data correction unit configured to correct, based on a result of determination performed by the ejection failure determination unit, print data for controlling the ejection of ink from the plurality of nozzles such that the ejection failure of the nozzle is compensated.

20. An ejection failure detection program for detecting an ejection failure of a nozzle in a printing apparatus including a head unit including a plurality of nozzles configured to eject ink onto a printing medium conveyed in a conveyance direction determined in advance and an imaging device configured to capture a print image,
the ejection failure detection program causing a computer included in the printing apparatus to execute:
a model generation step of generating a trained model constituted by an auto encoder by performing unsupervised learning as machine learning by giving a plurality of learning images each formed by ejecting ink from N nozzles to the auto encoder, the N being an integer of 1 or more;
a test pattern printing step of causing the printing apparatus to print a test pattern to be formed by ejecting ink from the plurality of nozzles;
a capturing step of causing the imaging device to capture a print image obtained in the test pattern printing step;
an image cutting step of cutting out, from a captured image obtained in the capturing step, a plurality of partial images each corresponding to N nozzles; and
an ejection failure determination step of determining whether or not a nozzle in an ejection failure state is included in N nozzles corresponding to input data based on a result of comparing a value obtained based on output data from the auto encoder and the input data with a threshold set as a parameter, by giving each of the plurality of partial images as the input data to the auto encoder constituting the trained model,
wherein the plurality of learning images do not include an image representing the ejection failure of the nozzle.
